# EUROPEAN PATENT SPECIFICATION

(11) **EP 3 240 231 B1**
(45) Date of publication and mention of the grant of the patent: **02.12.2020**
(21) Application number: 14909028.4
(22) Date of filing: 25.12.2014
(51) Int. Cl.: H04L 12/24

(54) **CLOUD-CONFIGURATION VISUALIZATION SYSTEM, CLOUD-CONFIGURATION VISUALIZATION METHOD, AND CLOUD-CONFIGURATION VISUALIZATION PROGRAM**
VISUALISIERUNGSSYSTEM FÜR CLOUD-KONFIGURATION, VISUALISIERUNGSVERFAHREN FÜR CLOUD-KONFIGURATION UND VISUALISIERUNGSPROGRAMM FÜR CLOUD-KONFIGURATION
SYSTÈME DE VISUALISATION DE CONFIGURATION EN NUAGE, PROCÉDÉ DE VISUALISATION DE CONFIGURATION EN NUAGE, ET PROGRAMME DE VISUALISATION DE CONFIGURATION EN NUAGE

(43) Date of publication of application: 01.11.2017
(73) Proprietor: Hitachi Systems, Ltd., Tokyo 141-8672 (JP)
(72) Inventor: IIKURA, Ken, Tokyo 141-8672 (JP); AKIYAMA, Hiroshi, Tokyo 141-8672 (JP); YOSHITAKE, Michiori, Tokyo 141-8672 (JP); KAWATO, Akifumi, Tokyo 141-8672 (JP)
(74) Representative: Hoffmann Eitle
(86) International application number: PCT/JP2014/084399
(87) International publication number: WO 2016/103421

(56) References cited:
- JP-A- 2002 314 587
- JP-A- 2011 238 073
- JP-A- 2011 238 073
- JP-A- 2013 008 089
- JP-A- 2013 081 053
- MASARU SUGAWARA ET AL: "Private-cloud management system with visualization technology for fast and simple operation", IEICE TECHNICAL REPORT, DENSHI JOUHOU TSUUSHIN GAKKAI, JP, vol. 109, no. 463 (ICM2009-61), 4 March 2010 (2010-03-04), pages 93-98, XP008185233, ISSN: 0913-5685
- MASARU SUGAWARA ET AL.: 'Private-cloud management system with visualization technology for fast and simple operation' IEICE TECHNICAL REPORT vol. 109, no. 463, 04 March 2010, pages 93 - 98, XP008185233

## Description

### [Technical Field]

The present invention relates to a cloud-configuration visualization system, a cloud-configuration visualization method and a cloud-configuration visualization program that acquires configuration information of a cloud environment and displays the acquired information, so as to allow the configuration to be apprehended easily.

### [Background Art]

Recently, in the field of computer technology, a service of constructing a cloud environment using a combination of various virtualization techniques and providing the constructed cloud environment to users is spreading rapidly. In the cloud environment, it is necessary to allow the configuration to be apprehended, and since the configuration changes dynamically, it is necessary to save the information before and after the change to correspond to occurrence of failure or to improve performance.

Techniques disclosed in Patent Literatures 1 and 2 are examples of documents related to the above-described art. Patent Literature 1 discloses an art of generating a logical topology information of a virtual network related to a virtual network composed of virtualization techniques including a virtual LAN, a virtual interface, and a virtual router. Therefore, according to the art disclosed in Patent Literature 1, (1) a setting pattern related to the generation of multiple kinds of virtual resources and a setting pattern related to connections between the multiple kinds of virtual resources are extracted from setting information (config) on network apparatuses constituting the virtual network. (2) Identifiers necessary to generate the virtual resources, or to generate connection relations between the virtual resources are extracted from the extracted setting pattern. (3) Configuration components of a logical topology corresponding to the virtual resources or connections between the virtual resources are generated by using information which includes the extracted identifiers. (4) The generated configuration components of individual logical topologies are integrated to generate logical topology information expressed as one topology, the information of which is stored in a storage.

The art disclosed in Patent Literature 2 provides a configuration information acquisition method in a cloud environment which implements an efficient monitoring operation while reducing the amount of data to be handled, by reducing a load to a physical server to be monitored in a system of the cloud environment, and an apparatus for implementing the method. The art of Patent Literature 2 includes the steps of collecting a mirrored packet from packets flowing between a plurality of virtual machines, analyzing traffic/route information from the collected packet; determining whether a corresponding relationship between a physical server and the virtual machines is changed, as a result of the analysis; instructing a monitoring device which monitors an entire configuration, to acquire configuration information when it is recognized that the corresponding relationship is changed; and acquiring and storing the configuration information in the monitoring device after the change.

### [Citation List]

### [Patent Literature]

[PTL 1] Japanese Unexamined Patent Application Publication No 2013-081053
[PTL 2] Japanese Unexamined Patent Application Publication No. 2012-004781 MASARU SUGAWARA ET AL: "Private-cloud management system with visualization technology for fast and simple operation", IEICE TECHNICAL REPORT, DENSHI JOUHOU TSUUSHIN GAKKAI, JP, vol. 109, no. 463 (ICM2009-61), 4 March 2010, pages 93-98, ISSN: 0913-5685, introduces the system architecture of SaaS/PaaS operation based on the visualization technology of a relation among composition elements of SaaS/PaaS, and discusses the corresponding results.
   JP2011-238073A (CSK CORP) 24 November 2011 (2011-11-24) describes a server group integrated management system connected to a plurality of virtual servers which constitute a server group and a terminal device comprising a storage section to store compatible information between a specific environment which is an input/output environment specific to each of the plurality of the virtual servers and a common environment which is a common input/output environment to use each virtual server at a terminal device; and a control section to mutually convert an input/output of each of the plurality of the virtual servers and the input/output at the terminal device based on the compatible information stored in the storage section.

### [Summary of Invention]

### [Technical Problem]

According to the aforementioned technique, regarding an infrastructure configured of a cloud environment formed using a plurality of cloud service provider companies, there were no means to apprehend the entire environment being configured, and no means to apprehend the change of the configured environment. Therefore, there was a drawback in that in a state where failure has occurred, a long time was required to specify and fix the failure, and a cloud configuration preferable for changing the cloud environment could not be constructed. Therefore, the present invention aims at providing a system environment capable of apprehending the configuration of the cloud environment.

### [Solution to Problem]

The object of the invention is achieved by the subject-matter of the independent claims. Advantageous embodiments are defined in the dependent claims. Further examples are provided for facilitating the understanding of the invention.

In order to solve the above-described problems, one typical example provides a cloud-configuration visualization system configured to connect to one or more cloud service provision systems providing a cloud service, the system including a client apparatus and a server apparatus, the client apparatus including a cloud connection information reception part configured to receive a cloud connection information constructing a cloud environment from a user, and a configuration display processing part configured to perform display control on a screen displaying a configuration of the cloud environment, the server apparatus including a cloud connection information part configured to store and register the cloud connection information received by the cloud connection information reception part of the client apparatus in a cloud connection information DB, and a configuration information acquisition processing part configured to acquire the cloud configuration information constructed in the cloud service provision system from the cloud service provision system according to a cloud configuration information acquisition request from the configuration display processing part of the client apparatus, wherein the configuration display processing part having received a request command for displaying cloud configuration from the user is configured to extract a cloud ID for acquiring cloud configuration information from the cloud configuration display request command, and transmit the configuration display command of the extracted cloud ID to the configuration information acquisition processing part, wherein the configuration information acquisition processing part is configured to acquire a cloud connection information from the cloud connection information DB based on the cloud ID, specify a cloud service provision system acquiring the cloud configuration information based on the acquired cloud connection information, and transmit the cloud configuration information acquired from the specified cloud service provision system to the configuration display processing part, and the configuration display processing part is configured to generate a cloud configuration diagram using configuration component icons of each configuration component and connection information, based on the cloud configuration information received from the configuration information acquisition processing part, and display the generated cloud configuration diagram on the screen.

### [Advantageous Effects of Invention]

According to the cloud-configuration visualization system of the present invention, information acquired from the cloud service providers are collected and acquired, and based thereon, a visual configuration diagram is generated. Thereby, the entire configuration of the infrastructure environment can be apprehended speedily and easily. Problems, configurations and effects other than those described above will be clarified by the following description of embodiments.

### [Brief Description of Drawings]

[FIG. 1] FIG. 1 is a view illustrating an outline of invention of a cloud-configuration visualization system according to one embodiment of the present invention.
[FIG. 2] FIG. 2 is a view illustrating an entire configuration of a system using the cloud-configuration visualization system according to one embodiment of the present invention.
[FIG. 3] FIG. 3 is a block diagram illustrating an internal configuration of a client PC (client terminal).
[FIG. 4] FIG. 4 is a block diagram illustrating an internal configuration of a physical server.
[FIG. 5] FIG. 5 is a view illustrating a configuration example of a cloud connection information.
[FIG. 6] FIG. 6 is a view illustrating a configuration example of a cloud configuration information provided in a cloud service.
[FIG. 7] FIG. 7 is a flowchart illustrating a main processing for acquiring the cloud configuration information.
[FIG. 8] FIG. 8 is a flowchart illustrating an acquisition processing of cloud configuration information in a configuration information acquisition processing part.
[FIG. 9] FIG. 9 is a flowchart illustrating an acquisition processing of cloud configuration information in a configuration information display processing part.
[FIG. 10] FIG. 10 is a view illustrating a display image example of an inter-resource configuration.
[FIG. 11] FIG. 11 is a view illustrating a configuration example of a main pull-down menu.
[FIG. 12] FIG. 12 is a view illustrating a configuration example of a sub pull-down menu.
[FIG. 13] FIG. 13 is a flowchart illustrating a display processing of a network (NW) routing information.
[FIG. 14A] FIG. 14A is an image view illustrating a display example of a first network (NW) routing information.
[FIG. 14B] FIG. 14B is an image view illustrating a display example of a second network (NW) routing information.
[FIG. 14C] FIG. 14C is an image view illustrating a display example of a third network (NW) routing information.
[FIG. 15] FIG. 15 is a flowchart illustrating a display processing of a security group information.
[FIG. 16] FIG. 16 is an image view illustrating a display example of the security group information.
[FIG. 17] FIG. 17 is a flowchart illustrating a display processing of a status information.
[FIG. 18] FIG. 18 is an image view illustrating a display example of the status information.
[FIG. 19] FIG. 19 is a flowchart illustrating a display processing of search processing and search results of inter-configuration-information.
[FIG. 20] FIG. 20 is an image view illustrating a first display example according to the search results of inter-configuration-information.
[FIG. 21] FIG. 21 is an image view illustrating a second display example according to the search results of inter-configuration-information.

### [Description of Embodiments]

Embodiments of the present invention will now be described with reference to the drawings. In the following description, various information are referred to as "management tables", for example, but the various information can also be expressed by data structures other than tables. Further, the "management table" can also be referred to as "management information" to indicate that the information does not depend on the data structure.

The processes are sometimes described using the term "program" as the subject. The program is executed by a processor such as an MP (Micro Processor) or a CPU (Central Processing Unit) for performing determined processes. A processor can also be the subject of the processes, since the processes are performed by a processor using appropriate storage resources (such as memories) and communication interface devices (such as communication ports). The processor can also use dedicated hardware in addition to the CPU. The computer programs can be installed to each computer from a program source. The program source can be provided via a program assignment server or storage media, for example.

Each element, such as each controller, can be identified by numbers, but other types of identification information such as names can be used as long as they are identifiable information. The equivalent elements are denoted with the same reference numbers in the drawings and the description of the present invention, but the present invention is not restricted to the present embodiments, and other modified examples in conformity with the idea of the present invention are included in the technical scope of the present invention. The number of each component can be one or more than one, unless defined otherwise.

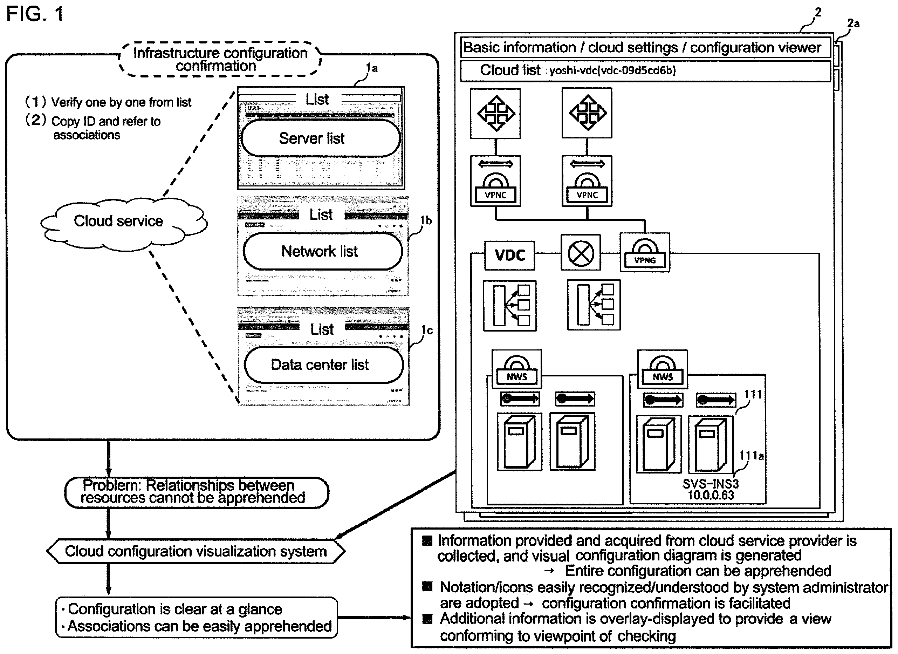

### <Outline of Invention> FIG. 1

FIG. 1 is a view illustrating an outline of the invention in a cloud-configuration visualization system according to one embodiment of the present invention.

The following problems occur in constructing an intra-company infrastructure environment using a public cloud provided to unspecified large number of general users through the Internet by a cloud provider (cloud service provider).

(p1) It was indispensable to utilize a standard tool unique to the cloud provider, and the result of the infrastructure environment of the cloud constructed using the standard tool is merely displayed in the form of lists of respective configuration components (resources: servers, networks, data centers and so on). Therefore, it was difficult to apprehend the connection statuses of the respective configuration components and the entire configuration.

For example, a server list 1a of FIG. 1 stores information on data center (hereinafter abbreviated as DC) ID to which a server belongs and a network ID being connected, in addition to the server ID. Similarly, a network list 1b stores information on the server ID being connected, in addition to the network ID. A DC list 1c stores information on server ID of the servers existing within the DC, in addition to the DC ID.

Therefore, overview of the infrastructure configuration (relationship between resources) cannot be apprehended speedily from the lists.

### (p2) Verification of IDs

It was necessary to copy lists and check the relationship between the respective IDs and the resources, in order to apprehend the overview of infrastructure configuration (relationship between resources), according to which errors and leaks of relationship between resources occurred, and the check required much time and workload.

Therefore, one preferred embodiment of the present invention proposes a cloud-configuration visualization system that allows the resource configuration to be recognizable at a glance, and association between resources to be apprehended easily. This cloud-configuration visualization system enables to provide a configuration viewer screen 2 of FIG. 1 to the user. Therefore, the following effects are achieved.
(s1) Information acquired from the cloud service provider is collected, and a visual configuration diagram is generated. Thereby, the entire configuration of the infrastructure environment can be apprehended speedily and easily.
(s2) Notations and icons easily recognized and understood by a system administrator (for example, virtual server 111, name of virtual server: SVS-INS3, connection port address: 10.0.0.63 of FIG. 1) are adopted to improve intelligibility of the entire configuration of the infrastructure environment, and to facilitate confirmation.
(s3) Information on added resources is overlay-displayed, and a configuration view conforming to viewpoint of checking is provided.

In further detail, the cloud configuration information on the cloud service (hereinafter abbreviated as configuration information) is displayed as a configuration diagram on a screen. An example of the displayed contents and displayed configuration include the following:
(c1) a structure is adopted where relationships between respective resources can be apprehended;
(c2) network routing information is displayed using arrows;
(c3) the same settings are linked to a plurality of virtual servers;
(c4) status conditions (such as power on/off, network
   connection/disconnection) of virtual servers and networks are displayed;
(c5) cross search of configuration information is enabled within the same cloud environment.

Thus, an effect of facilitating apprehension of configuration in a cloud environment is achieved.

Further, the cloud-configuration visualization system has a function to display operation statuses (such as CPU and memory utilization) of a virtual server or a function to output files, such that information showing the operation statuses of a predetermined period can be displayed in graphs, and files can be output. Thereby, an operation status of the constructed cloud infrastructure can be apprehended, and determination of extension of server, analysis of failure, and analysis of performance bottleneck can be facilitated.

Further, a resource selected on the configuration diagram can be set to execute a predetermined operation, such as by designating the operation of a virtual server (power on/off, restart, discard virtual server), and mistakes related to operating the wrong virtual server can be prevented. The items and contents described above will be described in detail in the following description.

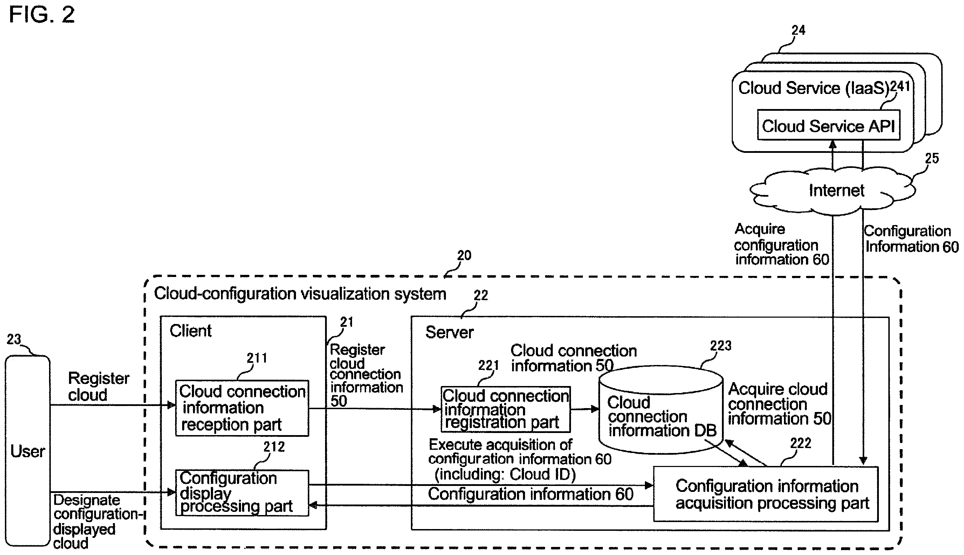

### <System Configuration> FIG. 2

FIG. 2 is a view illustrating an entire configuration of a system adopting the cloud-configuration visualization system according to an embodiment of the present invention. The system is composed of a cloud-configuration visualization system 20 and a cloud service (laaS: Infrastructure as a Service) 24. The cloud-configuration visualization system 20 and the cloud service (laaS) 24 are connected via a network 25 such as a LAN (Local Area Network).

A cloud service API (Application Programming Interface) 241 in the drawing refers to a software for operating the cloud service (laaS) 24 provided by the cloud service provider. Further, cloud connection information refers to information such as IDs and keys necessary for using the cloud service API 241. The configuration information refers to information on resources (such as a virtual DC, a virtual server, and a virtual network) in the cloud service 24. The cloud service (laaS) 24 includes hardware resources such as a large number of server apparatuses, storage devices, and network devices, and software resources such as various OSs (Operating Systems) and APs (Application Programs), wherein the resources are provided virtually to the users.

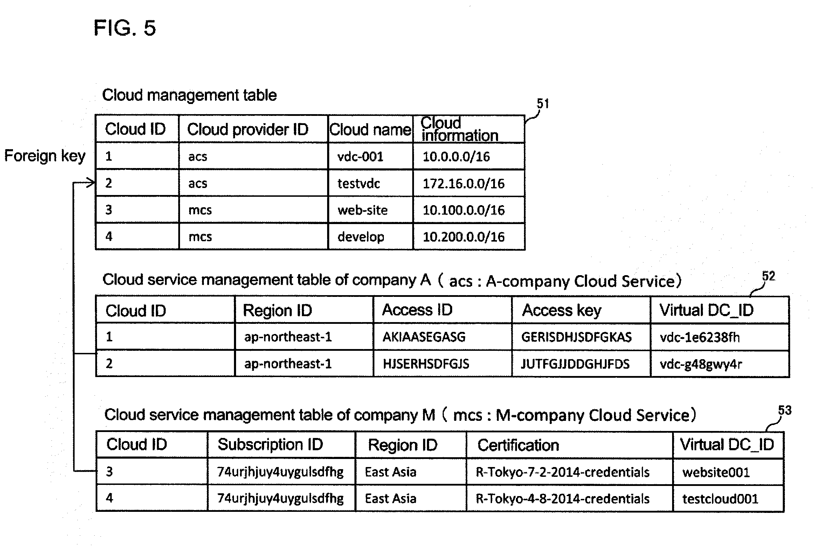

The cloud-configuration visualization system 20 is composed of a client PC (hereinafter abbreviated as client) 21, and a physical server (hereinafter abbreviated as server) 22. The client 21 has function blocks called a cloud connection information reception part 211 and a configuration display processing part 212. The cloud connection information reception part 211 is a function part for receiving registration of a cloud connection information (refer to FIG. 5) for a user 23 to construct the infrastructure environment. Further, the configuration display processing part 212 is a function part for receiving cloud information whose configuration is designated to be displayed by the user 23, and for displaying the configuration information of the cloud environment on the aforementioned configuration viewer screen 2 (screen serving as display part of the client 21). The configuration information is acquired by the configuration display processing part 212 requesting execution of acquisition of configuration information to a configuration information acquisition processing part 222 of the server 22.

The server 22 has three function blocks, a cloud connection information registration part 221, a configuration information acquisition processing part 222, and a cloud connection information DB 223. The cloud connection information registration part 221 is a function part for storing and saving a cloud connection information 50 received by the cloud connection information reception part 211 of the client 21 in the cloud connection information DB 223. The configuration information acquisition processing part 222 acquires the cloud connection information 50 stored in the cloud connection information DB 223, and based on the acquired cloud connection information 50, requests acquisition of configuration information 60 with respect to the cloud service (laaS) 24, and acquires the configuration information 60. Further, the configuration information acquisition processing part 222 has a function to transmit the acquired configuration information 60 to the configuration display processing part 212 of the client 21.

The user 23 registers the cloud connection information and designates the cloud whose configuration is to be displayed to the cloud-configuration visualization system 20. The cloud-configuration visualization system 20 acquires the configuration information 60 from the cloud service (laaS) 24 based on the received registration information (cloud connection information) and the designated cloud information. The user 23 can register a plurality of cloud services (laaS) 24 provided by different providers to constitute the infrastructure environment of the cloud. Therefore, even in the cloud-configuration visualization system 20, the configuration information 60 in cloud environments constructed for each of the different cloud services (laaS) 24 can be distinguished and displayed per service as the configuration diagram. Therefore, the cloud-configuration visualization system 20 has a function to acquire the configuration information 60 of a plurality of cloud services (laaS) 24 provided by different cloud service providers, and a function to display the configuration information 60. The detailed description will be illustrated later.

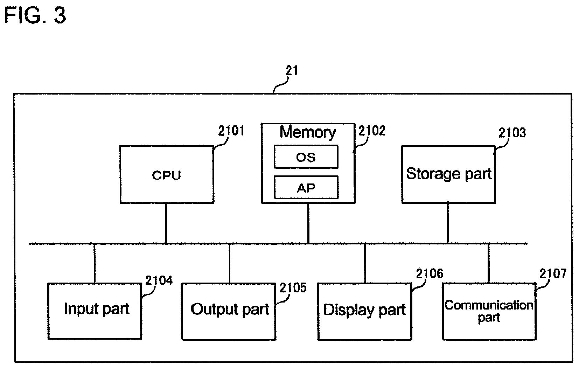

### <Internal Configuration of Client PC> FIG. 3

FIG. 3 is a block diagram illustrating an internal configuration of a client PC (client terminal).

The client 21 includes a CPU 2101, a memory 2102, a storage part 2103, an input part 2104, an output part 2105, a display part 2106, and a communication part 2107.

The CPU 2101 is a processor that controls the entire client 21. The memory 2102 is a device that temporarily stores various programs and various data described later. For example, OS and AP are stored in the memory 2102. The storage part 2103 is a device that permanently stores various programs and various data described later.

The input part 2104 is a device that receives input, such as a keyboard or a mouse. The output part 2105 is a device that outputs information and data, such as a speaker or a printer.

The display part 2106 is a device that displays information and data, such as a liquid crystal display. The communication part 2107 is a device that connects the client 210 with other devices (such as the server 22 or the apparatus of the cloud service (laaS) 24) via a network. The above-described configuration components are mutually connected via an internal bus.

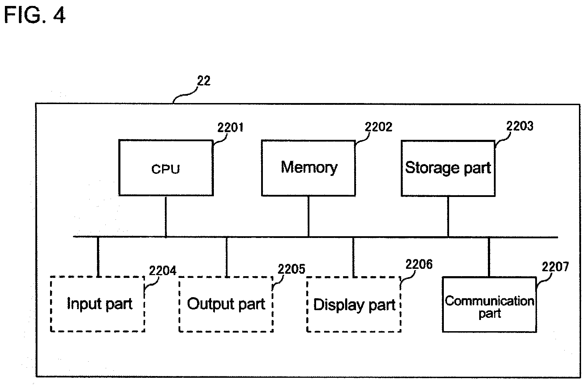

### <Internal Configuration of Physical Server> FIG. 4

FIG. 4 is a block diagram illustrating an internal configuration of a physical server. The server 22 includes a CPU 2201, a memory 2202, a storage part 2203, an input part 2204, an output part 2205, a display part 2206, and a communication part 2207.

The CPU 2201 is a processor that controls the entire server 22. The memory 2202 is a device that temporarily stores various programs and various data described later. The storage part 2203 is a device that permanently stores various programs and various data described later.

The input part 2204 is a device that receives input, such as a keyboard or a mouse. The output part 2205 is a device that outputs information and data, such as a speaker or a printer.

The display part 2206 is a device that displays information and data, such as a liquid crystal display. The communication part 2207 is a device that connects the server 22 with other devices (such as the client 21 or the apparatus of the cloud service (laaS) 24) via a network. The above-described configuration components are mutually connected via an internal bus.

The server 22 is not necessarily equipped with the input part 2204, the output part 2205 and the display part 2206 illustrated by the dotted lines, and in that case, the server 22 should merely have an interface to which these configuration components can be connected.

### <Cloud Connection Information> FIG. 5

FIG. 5 is a view illustrating a configuration example of a cloud connection information. The cloud connection information 50 is composed of a cloud management table 51, a cloud service management table of company A 52, and a cloud service management table of company M 53. The tables are provided to enable handling of multiple types of cloud services. Therefore, a table for managing the connection information specific to each cloud service is provided for each cloud service, and information is stored and managed in each table.

The cloud management table 51 is composed of a cloud ID for uniquely identifying the cloud type, a cloud provider ID for uniquely identifying the type of the cloud provider (cloud service provider 24), a cloud name which is the name of the cloud being used, and a cloud information expressed in the form of an IP address serving as the connection information to the cloud. A predetermined information is stored in each entry corresponding to the cloud ID. For example, "acs" is stored in the cloud provider ID where the cloud ID is "1", "vdc-001" is stored in the cloud name, and "10.0.0.0/16" is stored in the cloud information, and managed.

The cloud service management table of company A 52 is composed of a cloud ID for uniquely identifying the cloud type, a region ID for uniquely identifying the range of area managed by a cloud, an access ID for uniquely identifying the user 23, an access key used for access by the user 23, and a virtual DC_ID for uniquely identifying the virtual DC. A predetermined information is stored in each entry corresponding to the cloud ID. For example, "ap-northeast-1" is stored in the region ID where the cloud ID is "2", "HJSERHSDFGJS" is stored in the access ID, "JUTFGJJDDGHJFDS" is stored in the access key, and "vdc-g48gwy4r" is stored in the virtual DC_ID, and managed.

The cloud service management table of company M 53 is composed of a cloud ID for uniquely identifying the cloud type, a subscription ID for identifying the contents of the provided service, a region ID for uniquely identifying the area range managed by the cloud, a certification information for using the cloud service, and a virtual DC_ID for uniquely identifying the virtual DC. Predetermined information is stored in each entry corresponding to the cloud ID. For example, "74urjhjuy4uygulsdfhg" is stored in the subscription ID where the cloud ID is "3", "East Asia" is stored in the region ID, "R-Tokyo-7-2-2014-credentials" is stored in the certification, and "website001" is stored in the virtual DC_ID, and managed.

In the cloud management table 51, the cloud ID is set as a foreign key (common key) to associate the cloud service management table of company A 52 and the cloud service management table of company M 53 for management.

As for the cloud connection information 50, the user 23 enters necessary information to the cloud connection information reception part 211 of the client 21, and the information is registered. Specifically, predetermined selection and input of information using a menu or input area displayed on the display part 2106 of the client 21 in FIG. 3 is performed form the input part 2104. Then, the CPU 2101 temporarily stores the cloud connection information 50 received through the input part 2104 in the memory 2102 or the storage part 2103. The registration operation of the cloud connection information is executed by the cloud connection information reception part 211 controlling the CPU 2101.

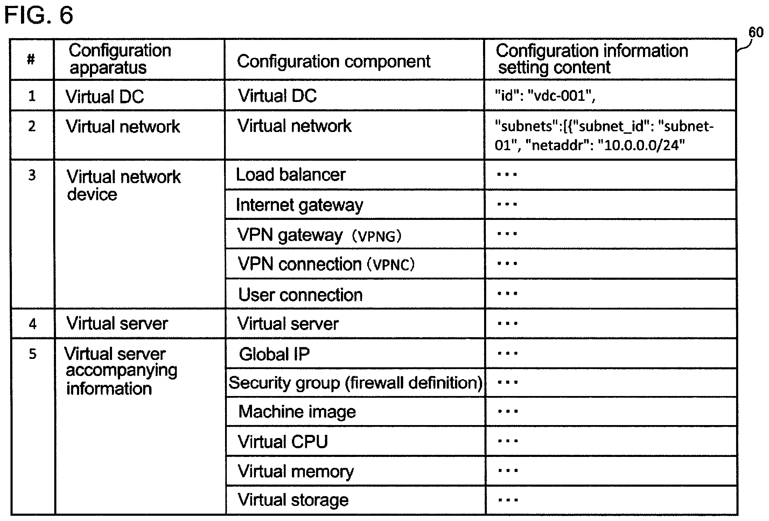

### <Cloud Service Configuration Information> FIG. 6

FIG. 6 is a view illustrating a configuration example of a cloud configuration information in the cloud service. The configuration information 60 in the cloud service is information corresponding to the cloud ID in the configuration information acquisition request transmitted to the cloud service 24 from the configuration information acquisition processing part 222 of the cloud-configuration visualization system 20.

The configuration information 60 is composed of an item number (#), a configuration apparatus, a configuration component, and a configuration information setting content. For example, regarding the virtual DC whose item number (#) is "1", based on the configuration information setting content, it can be recognized that the virtual DC_ID is "vdc-001". Further, according to this virtual DC, the setting content of the virtual network whose item number (#) is "2" is "subnets" :[{"subnet_id" : "subnet-01", "netaddr" : "10.0.0.0/24", so that it can be recognized that the subnet_id is "subnet-01" and that it is connected to a network having a network address of "10.0.0.0/24".

In item number (#) "3" where the configuration apparatus is a "virtual network device", the configuration components are "load balancer", "Internet gateway", "VPN (Virtual Private Network) gateway", "VPN connection", and "user connection", and although not illustrated, the setting contents of the configuration information are stored in each configuration component. Although not illustrated, the aforementioned cloud ID information is added to the configuration information 60.

According to the present embodiment, the configuration diagram is displayed on the configuration viewer screen 2 illustrated in FIG. 1 based on this configuration information 60, to allow the association and statuses of the configuration components to be viewed as a list. The configuration components are not restricted to the list of FIG. 6, and various configuration components are supported in each cloud service.

### <Processing Flow>

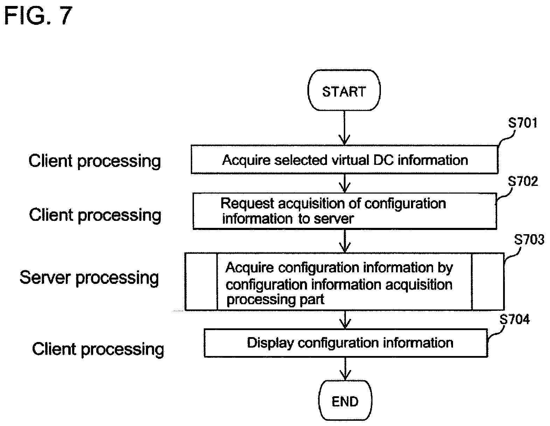

### <Configuration Information Acquisition Processing> FIGs. 7 - 9

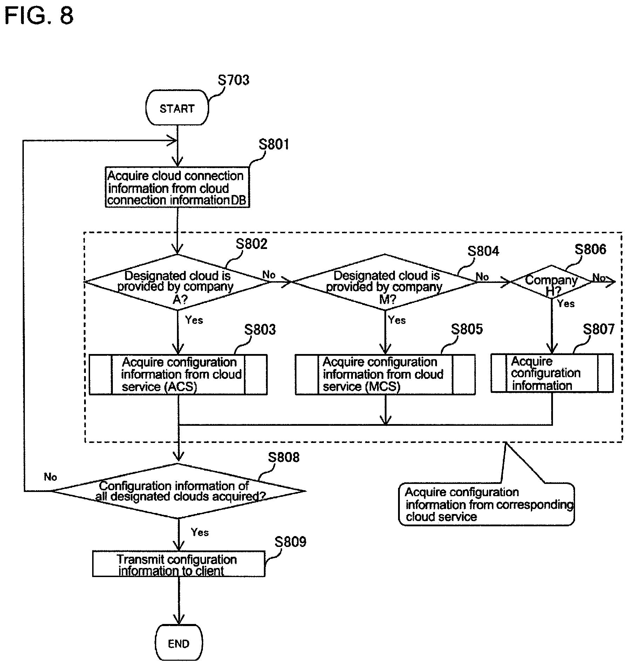

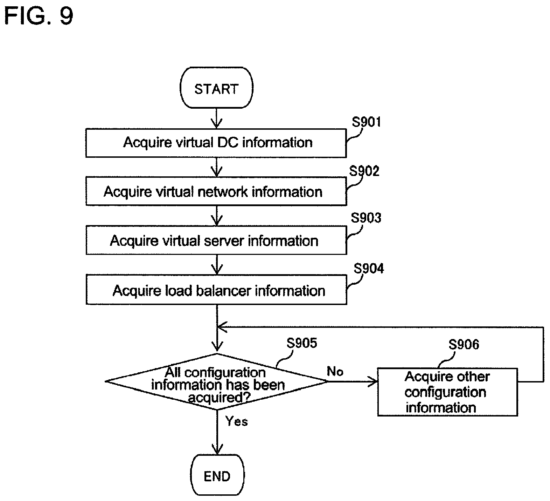

FIG. 7 is a flowchart illustrating a main processing for acquiring the cloud configuration information. FIG. 8 is a flowchart illustrating an acquisition processing of configuration information in the configuration information acquisition processing part. FIG. 9 is a flowchart illustrating an acquisition processing of configuration information in a configuration information display processing part. The subject of the processing is set as the function part of the client 21 (the cloud connection information reception part 211 or the configuration display processing part 212) or the function part of the server 22 (the cloud connection information registration part 221, the configuration information acquisition processing part 222, or the cloud connection information DB 223), but the subject can also be the CPU 2101 of the client 21 or the CPU 2201 of the server 22. The generation of the configuration diagram is performed by decomposing the acquired configuration information for each configuration component, applying a predetermined icon to each configuration component, and computing the relationship from the connection information in the configuration information.

In S701, the configuration display processing part 212 acquires a virtual DC (cloud) information selected by the user 23. Specifically, a virtual DC_ID (cloud ID) is entered in the cloud list on the configuration viewer screen 2 displayed on a display part 2104, the information of the virtual DC_ID is received by the input part 2104, and the information is transferred to the configuration display processing part 212.

In S702, the configuration display processing part 212 transmits the virtual DC_ID (cloud ID) to the configuration information acquisition processing part 222 of the server 22, and requests acquisition of the configuration information 60.

In S703, the configuration information acquisition processing part 222 executes the acquisition processing of the configuration information. The acquisition processing of the configuration information 60 relates to executing a subroutine processing illustrated in FIG. 8. The configuration information acquisition processing part 222 transmits the acquired configuration information 60 to the configuration display processing part 212.

In S704, the configuration display processing part 212 generates a configuration diagram to be displayed on the configuration viewer screen 2 from the received configuration information 60. Then, the configuration display processing part 212 transmits the information of the generated configuration diagram to the display part 2106 of the client 21, and requests the display part 2106 to display the configuration viewer screen 2.

In S801, the configuration information acquisition processing part 222 of the server 22 acquires the cloud connection information 50 from the cloud connection information DB 223 based on the received virtual DC_ID (cloud ID).

In S802, the configuration information acquisition processing part 222 determines whether the designated cloud is provided by company A based on the cloud provider ID corresponding to the designated cloud ID. If the designated cloud is provided by company A (S802: Yes), the configuration information acquisition processing part 222 executes S803, and if not, (S802: No), it executes S804.

In S803, the configuration information acquisition processing part 222 transmits an acquisition request of the configuration information 60 to the cloud service (ACS), and acquires the configuration information 60 in the cloud service (ACS).

In S804, the configuration information acquisition processing part 222 determines whether the designated cloud is provided by company M based on the cloud provider ID corresponding to the designated cloud ID. If the designated cloud is provided by company M (S804: Yes), the configuration information acquisition processing part 222 executes S805, and if not, (S804: No), it executes S806.

In S805, the configuration information acquisition processing part 222 transmits an acquisition request of the configuration information 60 to the cloud service (MCS), and acquires the configuration information 60 in the cloud service (MCS).

In S806, the configuration information acquisition processing part 222 determines whether the designated cloud is provided by company H based on the cloud provider ID corresponding to the designated cloud ID. If the designated cloud is provided by company H (S806: Yes), the configuration information acquisition processing part 222 executes S807, and if not, (S806: No), although not shown, it determines whether the cloud is provided by a cloud service provide company other than A, M and H.

In S807, the configuration information acquisition processing part 222 transmits an acquisition request of the configuration information 60 to the cloud service of company H, and acquires the configuration information 60 in the cloud service of company H.

In S808, the configuration information acquisition processing part 222 determines whether the configuration information of all designated clouds has been acquired. If the configuration information of all designated clouds has been acquired (S808: Yes), the configuration information acquisition processing part 222 executes S809, and if it has not been acquired (S808: No), the processes of S801 and subsequent steps are executed again.

In S809, the configuration information acquisition processing part 222 transmits the acquired configuration information 60 to the configuration display processing part 212 of the client 21. Then, the acquisition processing of the configuration information in the configuration information acquisition processing part 222 is ended.

Next, the details of the acquisition processing of the configuration information in S803, S805 and S807 will be described with reference to FIG. 9.

In S901, the configuration information acquisition processing part 222 acquires the configuration information setting content of the configuration information 60 where the configuration apparatus and the configuration component corresponds to the virtual DC (item number (#) is "1"). Then, an icon corresponding to the configuration component that corresponds to the acquired configuration information setting content is selected, and the connection information is added.

In S902, the configuration information acquisition processing part 222 acquires the configuration information setting content of the configuration information 60 where the configuration apparatus and the configuration component corresponds to the virtual network (item number (#) is "2"). Then, an icon corresponding to the configuration component that corresponds to the acquired configuration information setting content is selected, and the connection information is added.

In S903, the configuration information acquisition processing part 222 acquires the configuration information setting content corresponding to the virtual server (item number (#) is "4"). Then, an icon corresponding to the configuration component that corresponds to the acquired configuration information setting content is selected, and the connection information is added.

In S904, the configuration information acquisition processing part 222 acquires the configuration information setting content where the configuration component corresponds to the load balancer in the virtual network device (item number (#) is "3"). Then, it selects an icon corresponding to the configuration component that corresponds to the acquired configuration information setting content is selected, and the connection information is added.

In S905, the configuration information acquisition processing part 222 determines whether all configuration information has been acquired. If not all the configuration information are acquired (S905: No), the configuration information acquisition processing part 222 executes S906, and if all information are acquired (S905: Yes), the processing is returned to any one of the processes S803, S805 or S807 of the call destination.

In S906, the configuration information acquisition processing part 222 acquires the configuration information of other configuration apparatuses or configuration components. Then, an icon corresponding to the configuration component that corresponds to the acquired configuration information setting content is selected, and the connection information is added. The configuration information acquisition processing part 222 executes the processing of S905 again.

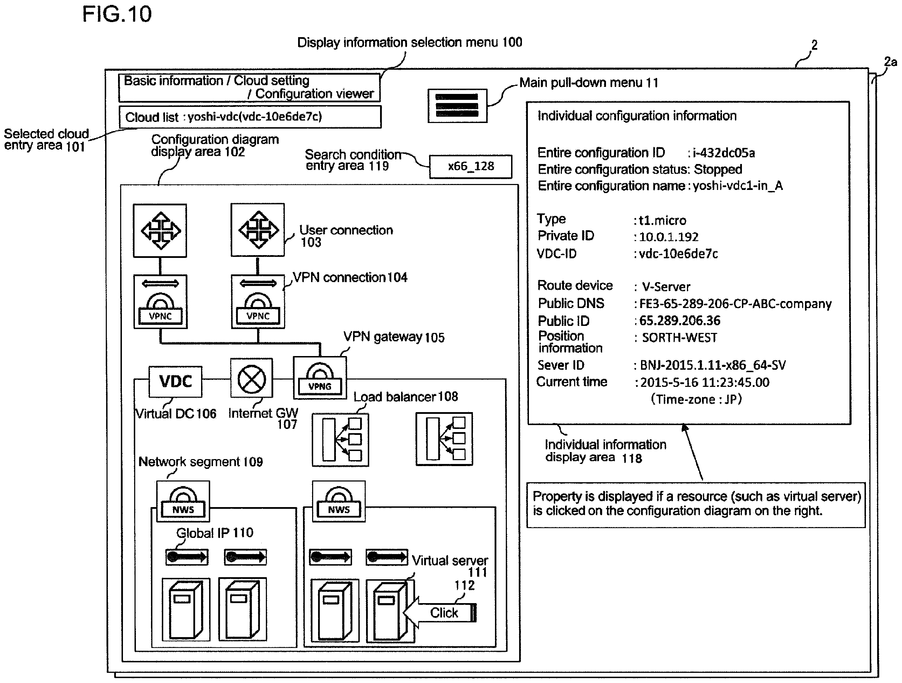

By the processing of FIGs. 7 through 9, the configuration diagram of the cloud required by the user 23 can be displayed on the configuration viewer screen 2, and the cloud configuration can be easily apprehended. Further, the configuration diagram can be created using notation and icons easily recognized by engineers. The specific inter-resource configuration display will be described with reference to FIG. 10.

### <Inter-resource Configuration Display Image> FIG. 10

FIG. 10 is a view illustrating a display image example of an inter-resource configuration. The configuration viewer screen 2 includes a main pull-down menu 11, a display information selection menu 100, a selected cloud entry area 101, a configuration diagram display area 102, an individual information display area 118, and a search condition entry area 119.

The main pull-down menu 11 is a menu for selecting and displaying the resource to be displayed or the status of the displayed resource (such as the operation status or the connection status).

The display information selection menu 100 is a menu for switching between a basic information entry screen, a cloud setting screen, and a configuration viewer screen. Necessary setting of information or viewing of the configuration information is enabled by the user 23 selecting the necessary screen from the display information selection menu 100 and displaying the screen on the display.

The selected cloud entry area 101 is an area for entering the type of cloud to be displayed on the configuration diagram display area 102.

The configuration diagram display area 102 is an area in which the configuration diagram generated from the configuration information 60 is displayed. The configuration and connection status are displayed in the configuration diagram display area 102 using notations and icons easily recognized by engineers. For example, in the example of FIG. 10, a screen configuration is adopted where a user connection 103, a VPN connection (VPNC) 104, a VPN gateway (VPNG) 105, a virtual DC 106, an Internet gateway (GW) 107, a load balancer 108, a network segment (NWS) 109, a global IP 110, and a virtual server 111 are displayed as icons, such that the connection configuration and the entire configuration can be apprehended at a glance.

The individual information display area 118 is a display area for displaying property information related to a resource in a state where a resource icon (such as a virtual server 111) in the configuration diagram display area 102 is clicked 112 using a mouse, for example.

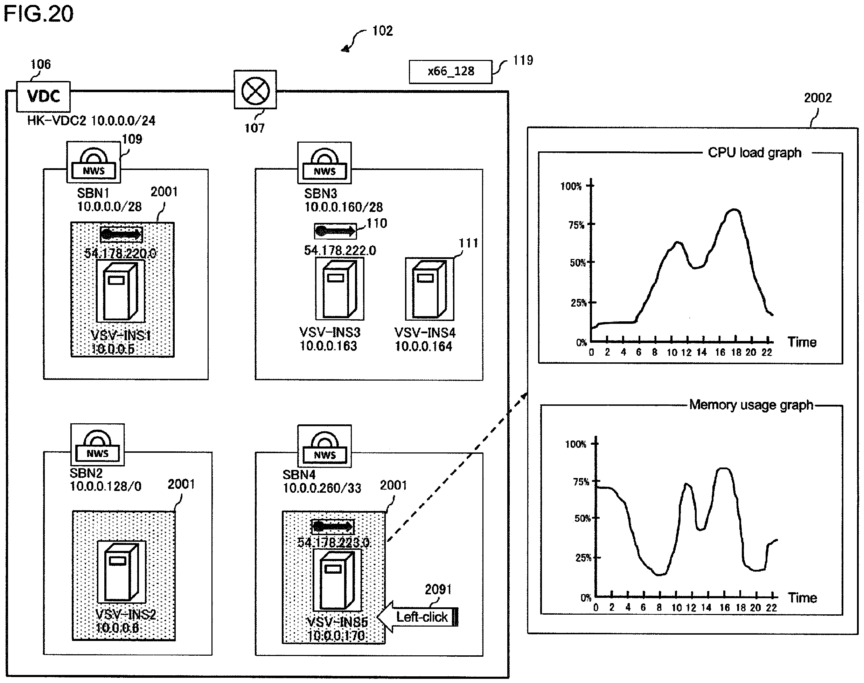

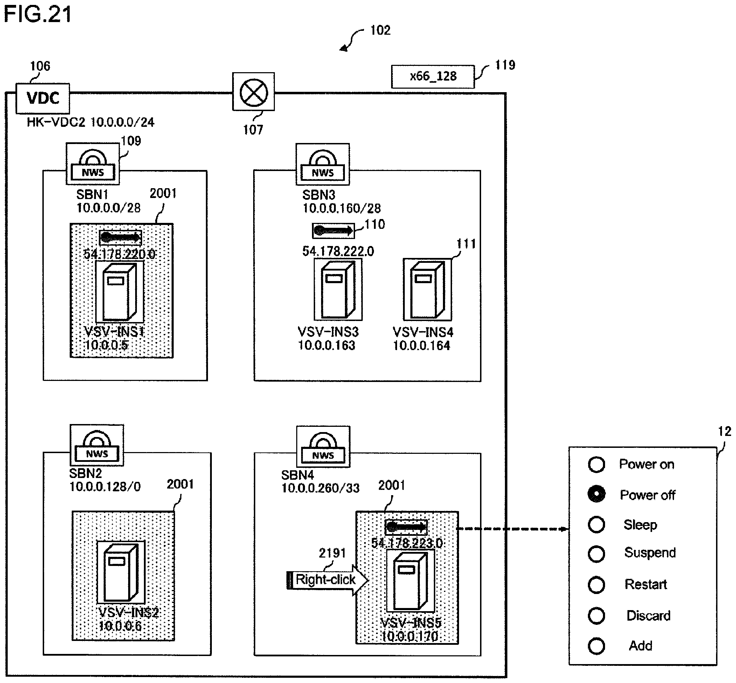

The search condition entry area 119 is an area where the user 23 enters a condition for searching the resource that the user wishes to find, and in the example of FIG. 10, a condition of "x66_128" is entered to search for a CPU with an x66 architecture capable of performing processing in 128-bit units. The virtual server using the CPU matching this condition is highlight-displayed (highlighted). This processing is described in detail with reference to FIGs. 20 and 21.

As described, the configuration diagram of a cloud that the user 23 needs can be displayed on the configuration viewer screen 2, and the cloud configuration can be easily apprehended. Further, the status of respective resources can be displayed and resources matching the entered condition can be highlighted, and the visibility can be improved.

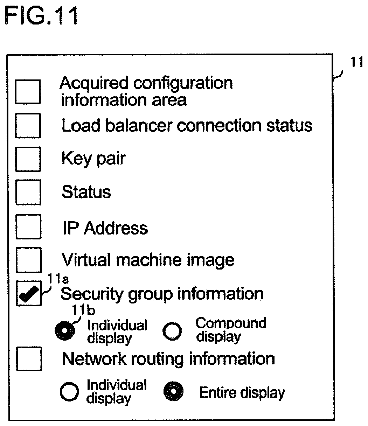

### <Menu Screen> FIGs. 11 - 12

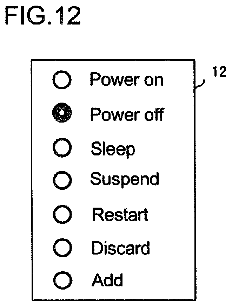

FIG. 11 is a view illustrating a configuration example of a main pull-down menu. FIG. 12 is a view illustrating a configuration example of a sub pull-down menu. The main pull-down menu 11 includes an acquired configuration information area, a load balancer connection status, a key pair, a status, an IP address, a virtual machine image, a security group information, a check box 11a, and a radio button 11b. If an icon of the main pull-down menu 11 illustrated in FIG. 10 is clicked using a mouse, for example, this pull-down menu is displayed on the screen.

For example, if the user wishes to display a security group information in the configuration diagram display area 102, the user enters a checkmark in the check box 11a, and further uses the radio button to switch between an individual display (where only one kind of security group information is displayed) and a compound display (where all security group information is displayed). Further, the same applies for network routing information. Thereby, the security group to which the virtual server 111 belongs can be apprehended speedily.

The sub pull-down menu 12 is a submenu for designating operations of the virtual server 111. The types of the sub pull-down menu 12 include "power on", "power off", "sleep", "suspend", "restart", "discard", and "add". For example, if a resource to be operated is right-clicked on the sub pull-down menu 12, a pull-down menu is displayed.

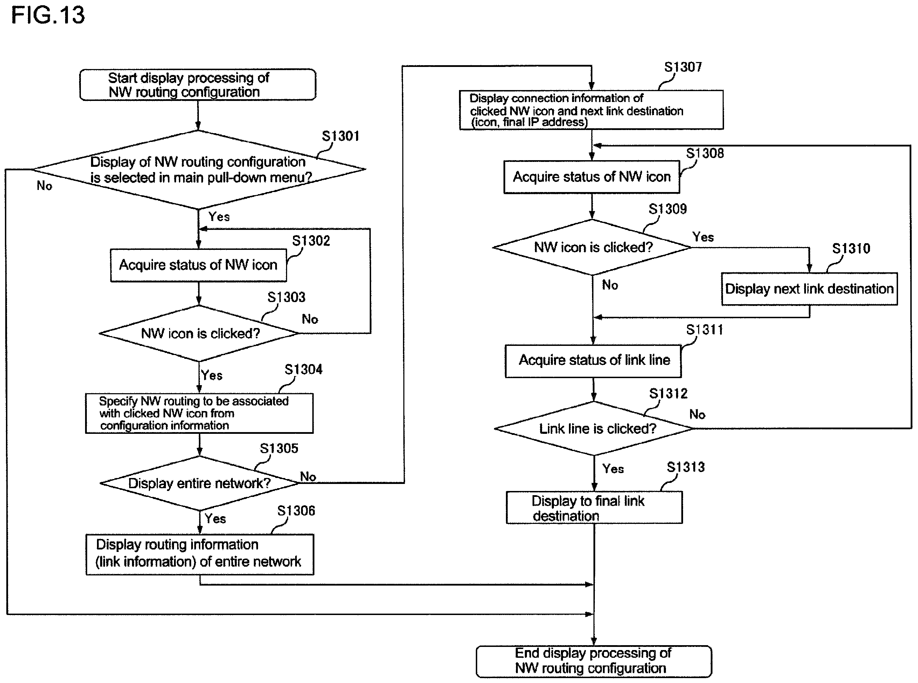

### <Network (NW) Routing Information Display> FIGs. 13 - 14

FIG. 13 is a flowchart illustrating a display processing of network (NW) routing information. The subject of the processing is set as the configuration display processing part 212 of the client 21, but it can also be the CPU 2101 of the client 21.

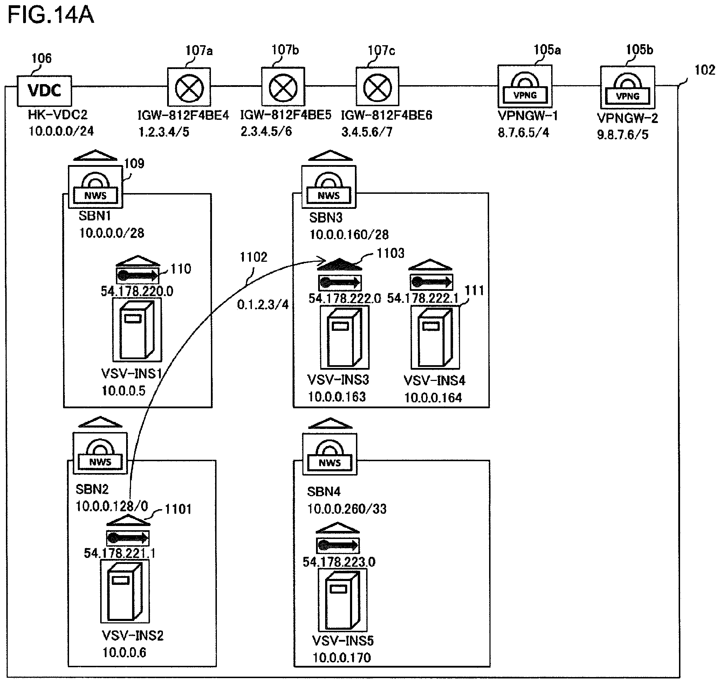

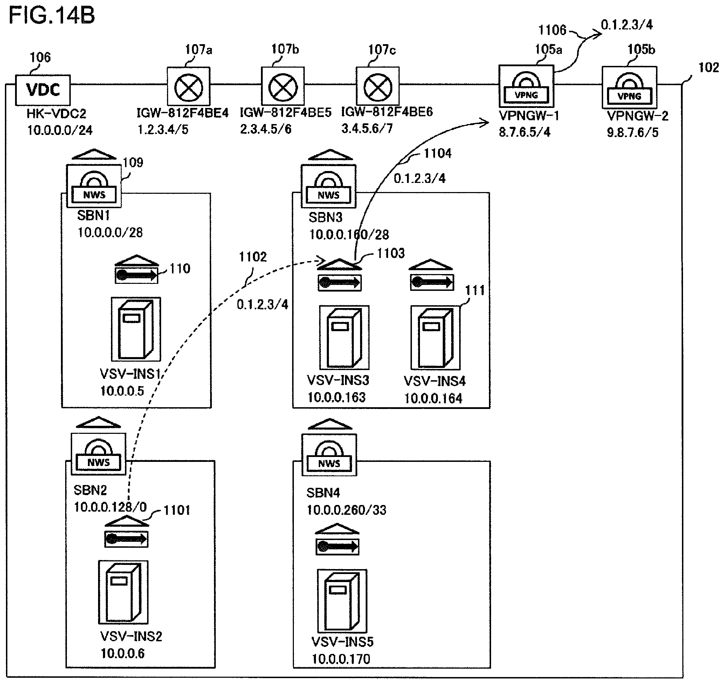

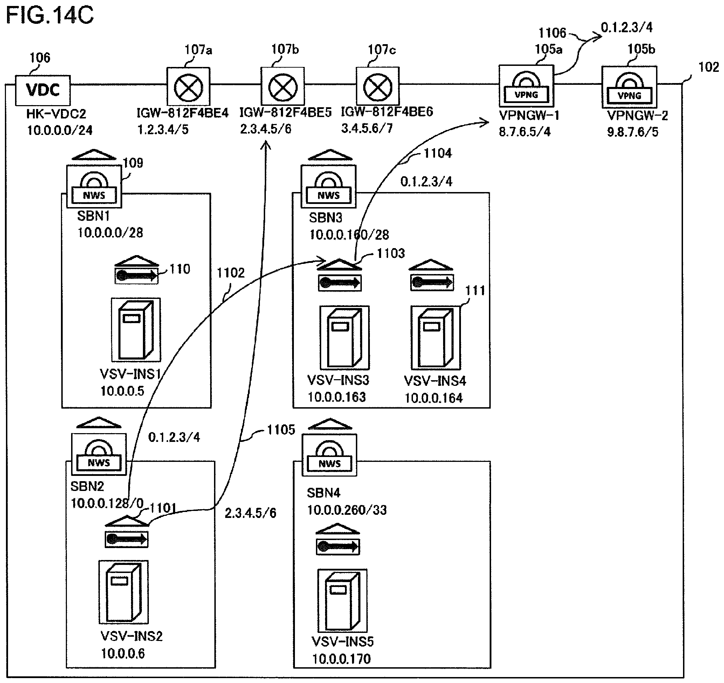

FIG. 14A is an image illustrating a display example of a first network (NW) routing information. FIG. 14B is an image illustrating a display example of a second network (NW) routing information. FIG. 14C is an image illustrating a display example of a third network (NW) routing information.

In S1301, the configuration display processing part 212 determines whether a display of NW routing configuration has been selected in the main pull-down menu 11. That is, the configuration display processing part 212 determines whether a checkmark is entered in the NW routing information check box of the main pull-down menu 11. If display is selected (S1301: Yes), the configuration display processing part 212 executes S1302, and if display is not selected, the present processing is ended.

In S1302, the configuration display processing part 212 acquires the status of a NW icon 1101 (refer to FIG. 14A).

In S1303, the configuration display processing part 212 determines whether the NW icon 1101 has been clicked. If the icon has been clicked (S1303: Yes), the configuration display processing part 212 executes S1304, and if not (S1303: No), S1302 is executed again.

In S1304, the configuration display processing part 212 specifies a NW routing to be associated with the clicked NW icon from the configuration information 60.

In S1305, the configuration display processing part 212 determines whether to display the entire network. In the present embodiment, the entire network is displayed if the entire display has been selected by the radio button of the network routing information of the main pull-down menu 11. The entire network can also be determined to be displayed when a connecting line (link line) 1102 illustrated in FIG. 14A is clicked. If the entire network is to be displayed (S1305: Yes), the configuration display processing part 212 executes S1306, and if not (S1305: No), S1307 is executed.

In S1306, the configuration display processing part 212 displays the routing information (link information) of the entire network. Then, the processing is ended.

In S1307, the configuration display processing part 212 displays the connection information of the clicked NW icon 1101 and the next link destination (NW icon 1103, final IP address, "0.1.2.3/4" in the example of FIG. 14A). Then, the NW icon 1103 is colored and highlighted.

In S1308, the configuration display processing part 212 acquires the status of a NW icon 1103.

In S1309, the configuration display processing part 212 determines whether the NW icon 1103 has been clicked. If the icon has been clicked (S1309: Yes), the configuration display processing part 212 executes S1301, and if it is not clicked (S1309: No), S1311 is executed.

In S1310, the configuration display processing part 212 displays the next link destination.

In S1311, the configuration display processing part 212 acquires the status of a link line 1102.

In S1312, the configuration display processing part 212 determines whether the link line 1102 has been clicked. If the link line 1102 has been clicked (S1312: Yes), the configuration display processing part 212 executes S1313, and if not (S1312: No), S1308 is executed again.

In S1313, the configuration display processing part 212 displays the final link destination, and ends the processing.

By the processing described above, the network (NW) routing information illustrated in FIGs. 14A through 14C is displayed.

In FIG. 14A, if the user 23 clicks the NW icon 1101, the cloud-configuration visualization system 20 highlights the connection destination NW icon 1103, displays the connection of the NW icon 1101 and the NW icon 1103 via the link line 1102, and displays the final connection destination IP address ("0.1.2.3/4") near the link line 1102. Thereby, the user 23 can recognize the information of the connection status of the network and the final connection destination information speedily.

In FIG. 14B, if the user 23 clicks the link line 1102, the cloud-configuration visualization system 20 displays the link lines 1104 and 1106 on the path to the final connection destination IP address ("0.1.2.3/4"). Thereby, the user can apprehend the path through which a virtual server VSV-INS2 (IP address: "10.0.0.6") is connected to a device at the final connection destination IP address ("0.1.2.3/4"). In the present example, it can be recognized that the virtual server VSV-INS2 is connected via a virtual server VSV-INS3 (IP address: "10.0.0.163") and a virtual network gateway VPNGW-1 (IP address: "8.7.6.5/4") to the final connection destination IP address ("0.1.2.3/4").

In FIG. 14C, if the entire display has been selected by the radio button of the network routing information of the main pull-down menu 11 as described earlier, the cloud-configuration visualization system 20 displays the entire network. That is, a link line 1105 and a final connection destination IP address "2.3.4.5/6" are displayed in addition to the link line information of FIG. 14B. Thus, the cloud-configuration visualization system 20 can visually display the entire network information connected to the virtual server VSV-INS2. Therefore, the user 23 can apprehend the entire network information in the virtual server VSV-INS2.

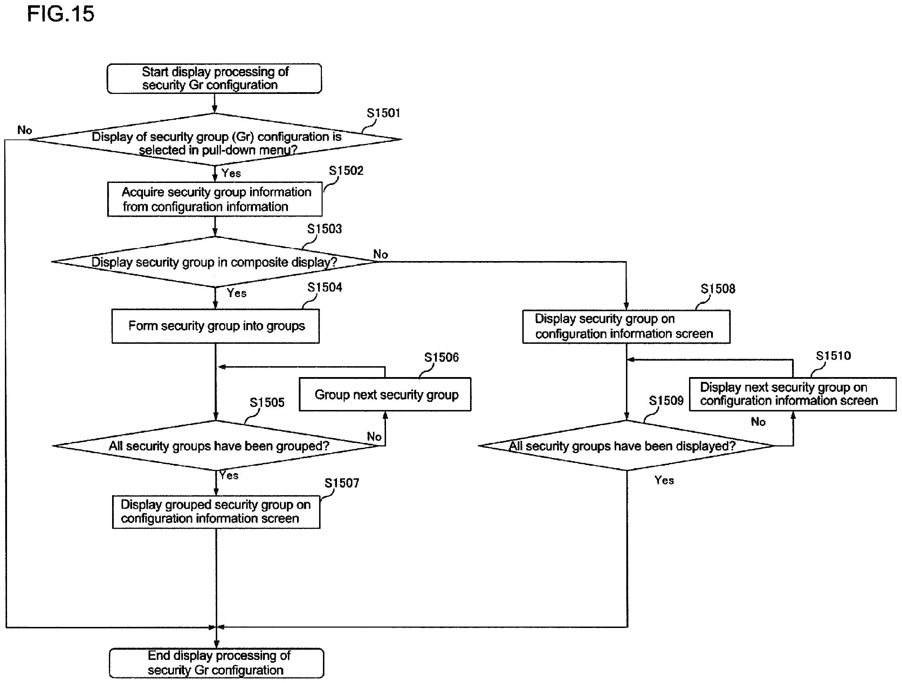

### <Security Group Display> FIGs. 15 - 16

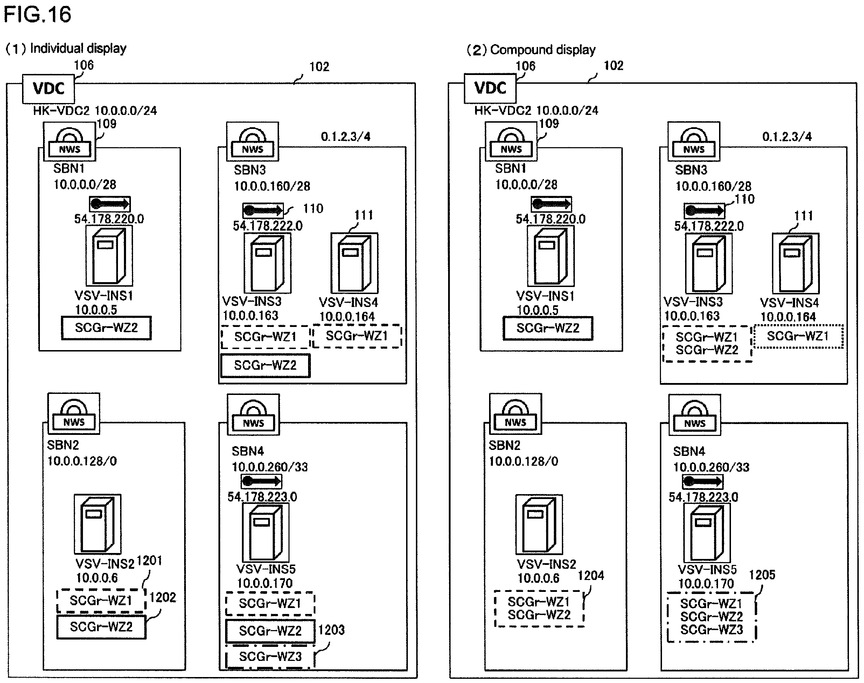

FIG. 15 is a flowchart illustrating a display processing of a security group information. FIG. 16 is an image view illustrating a display example of the security group information. The subject of the processing is set as the configuration display processing part 212 of the client 21, but it can also be the CPU 2101 of the client 21.

In S1501, the configuration display processing part 212 determines whether a display of security group (Gr) configuration is selected in the main pull-down menu 11. That is, the configuration display processing part 212 determines whether a checkbox of the security group information is selected. If it is selected (S1501: Yes), the configuration display processing part 212 executes S1502, and if not (S1501: No), the processing is ended.

In S1502, the configuration display processing part 212 acquires the security group information from the configuration information 60.

In S1503, the configuration display processing part 212 determines whether to display the security group via individual display or composite display. Individual display refers to a display method of discriminating virtual servers to which the same security group is linked. Compound display refers to a display method of discriminating virtual servers of the same security condition (having the same combination of security groups). If composite display is determined (S1503: Yes), the configuration display processing part 212 executes S1504, and if individual display is determined (S1503: No), it executes S1508.

In S1504, the configuration display processing part 212 classifies the acquired security group information, and divides the classified security groups into groups.

In S1505, the configuration display processing part 212 determines whether all security groups have been grouped. If all have not been grouped (S1505: No), the configuration display processing part 212 executes S1506, and if completed (S1505: Yes), it executes S1507.

In S1506, the configuration display processing part 212 groups the next security group. Then, the configuration display processing part 212 executes S1505 again.

In S1507, the configuration display processing part 212 displays the grouped security group on the screen (configuration diagram display area 102: composite display of FIG. 16 (2)), and the process is ended.

In S1508, the configuration display processing part 212 displays the security group on the screen (configuration diagram display area 102).

In S1509, the configuration display processing part 212 determines whether all the grouped security groups have been displayed. If not all have been displayed (S1509: No), the configuration display processing part 212 executes S1510, and if all have been displayed (S1509: Yes), the processing is ended.

In S1510, the next security group is displayed on the screen (configuration diagram display area 102).

According to the (1) individual display of FIG. 16, it can be recognized that:
virtual servers VSV-INS2 through VSV-INS5 are linked to security group "SCGr-WZ1" (reference number 1201);
virtual servers VSV-INS1 through VSV-INS3 and VSV-INS5 are linked to security group "SCGr-WZ2" (reference number 1202); and
virtual server VSV-INS5 is linked to security group "SCGr-WZ3" (reference number 1203).

Further, according to the (2) composite display of FIG. 16, it can be recognized that:
security group "SCGr-WZ2" is linked to the virtual server VSV-INS1;
security groups"SCGr-WZ1" and "SCGr-WZ2" (reference number 1204) are linked to the virtual server VSV-INS2;
the virtual server VSV-INS3 is the same as the virtual server VSV-INS2;
security group "SCGr-WZ1" is linked to the virtual server VSV-INS4; and
three security groups "SCGr-WZ1", "SCGr-WZ2" and "SCGr-WZ3" are linked to the virtual server VSV-INS5.

Thus, a virtual server to which the same security group is linked can be recognized by the individual display. Further, the virtual server in the same security condition (having the same combination of security groups) can be recognized by the composite display.

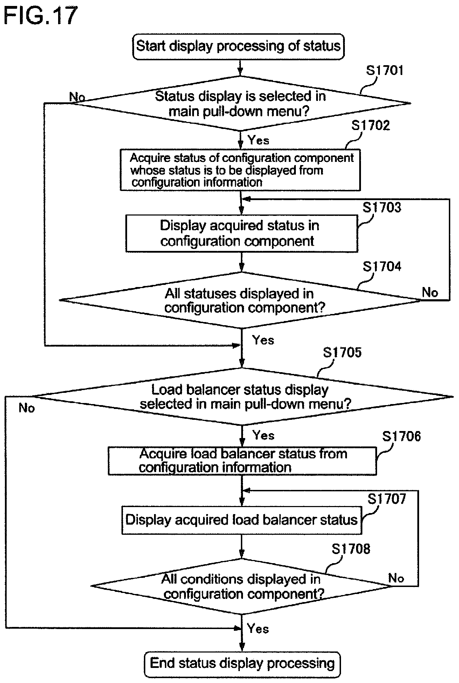

### <Status Display> FIGs. 17 - 18

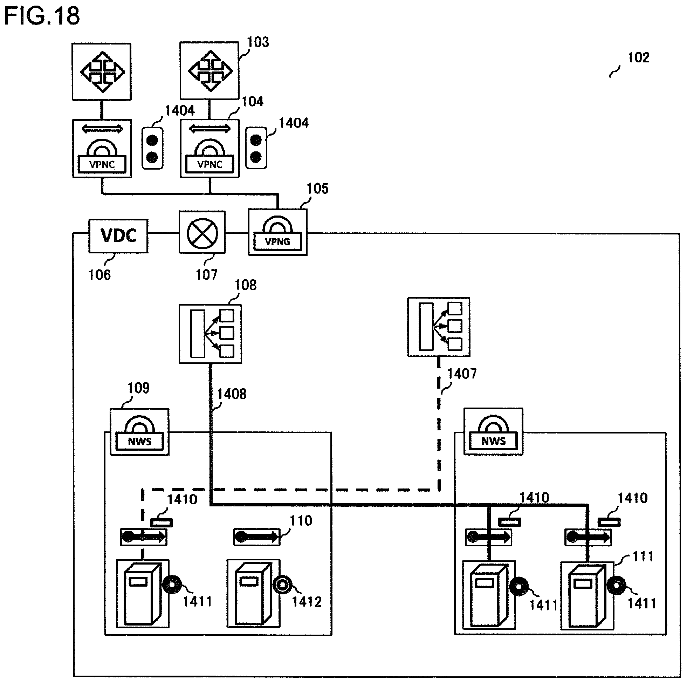

FIG. 17 is a flowchart illustrating a display processing of status information. FIG. 18 is an image view illustrating a display example of the status information. The subject of the processing is set as the configuration display processing part 212 of the client 21, but it can also be the CPU 2101 of the client 21.

In S1701, the configuration display processing part 212 determines whether status display is selected in the main pull-down menu 11. If the display is selected (S1701: Yes), the configuration display processing part 212 executes S1702, and if not (S1701: No), it executes S1705.

In S1702, the configuration display processing part 212 acquires the status of the configuration component whose status is to be displayed from the configuration information 60.

In S1703, the configuration display processing part 212 displays the acquired status in the configuration component (resource icon). For example, a status icon 1404 displaying the status is displayed near a VPN connection (VPNC) icon 104.

In S1704, the configuration display processing part 212 determines whether all statuses have been displayed in the configuration components (resource icons). If all statuses have been displayed (S1704: Yes), the configuration display processing part 212 executes S1705, and if not (S1704: No), it executes the processes after S1703 again.

In S1705, the configuration display processing part 212 determines whether the display of load balancer status is selected in the main pull-down menu 11. If display is selected (S1705: Yes), the configuration display processing part 212 executes S1706, and if not (S1705: No), the process is ended.

In S1706, the configuration display processing part 212 acquires the load balancer status from the configuration information 60.

In S1707, the configuration display processing part 212 displays the connection status of a load balancer icon 108 and the virtual server 111 based on the acquired load balancer status.

In S1708, the configuration display processing part 212 determines whether display of connection status of all load balancer icons 108 and the virtual server 111 are completed. If display is not completed (S1708: No), the configuration display processing part 212 executes S1707 again, and if display is completed (S1708), the process is ended.

In FIG. 18, the icons subjected to status display are, for example, a status icon 1404 of the aforementioned VPN connection icon (VPNC) 104, load balancer status icons 1407/1408 of the load balancer 108, a global IP status icon 1410 of a global IP 110, and virtual server status icons 1411/1412 of the virtual server 111. However, the display is not restricted to the status display of these icons, and it is possible to generate and display status icons of the virtual DC 106 or the Internet gateway 107.

The virtual server status icon 1411 of the virtual server 111 is shown in green to indicate an operated status, and the virtual server status icon 1412 is shown in red to indicate a stopped status. The color indication of icons can be changed to allow statuses of resources to be apprehended immediately, such that failure locations can be specified easily, for example. Further, the virtual server status icon can be shown in yellow, for example, to indicate a startup/discarding/high-load status.

As described, the use of the cloud-configuration visualization system 20 has an effect of facilitating apprehension of cloud configuration.

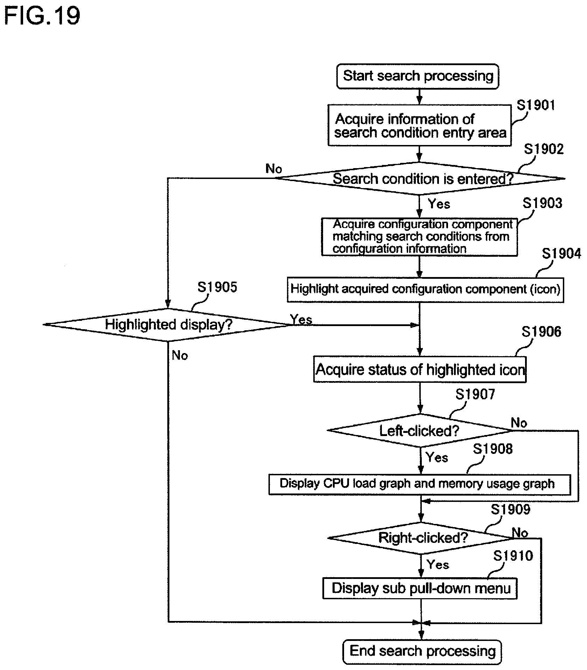

### <Search Result Display> FIGs. 19 - 21

### <Search Processing - Display Processing> FIG. 19

FIG. 19 is a flowchart illustrating an inter-configuration-information search processing, and a display processing of the search result. The configuration display processing part 212 starts the operation of the present processing at a timing in which a search condition is entered to the search condition entry area 119 or the generation of a click to the highlighted icon. The subject of the processing is set as the configuration display processing part 212 of the client 21, but it can also be the CPU 2101 of the client 21.

In S1901, the configuration display processing part 212 acquires the information of the search condition entry area 119.

In S1902, the configuration display processing part 212 determines whether a search condition has been entered to the search condition entry area 119. If the user 23 has entered the search condition in the search condition entry area 119 (S1902: Yes), the configuration display processing part 212 executes S1903, and if not (S1902: No), it executes S1905.

In S1903, the configuration display processing part 212 acquires a configuration component (resource icon) matching the search condition from the configuration information 60.

In S1904, the configuration display processing part 212 highlights the acquired configuration component (resource icon).

In S1905, the configuration display processing part 212 determines whether there is a highlighted configuration component (resource icon). If there is a highlighted configuration component (resource icon) (S1905: Yes), the configuration display processing part 212 executes S1906, and if not, ends the process.

In S1906, the configuration display processing part 212 acquires the status of the highlighted icon (status of click).

In S1907, the configuration display processing part 212 determines whether a left-click has been performed. If left-click has been performed (S1907: Yes), the configuration display processing part 212 executes S1908, and if not (S1907: No), it executes S1909.

In S1908, the configuration display processing part 212 displays a CPU load graph and a memory usage graph in a display area 2002. It is also possible to display either one of the CPU load graph and the memory usage graph. Further, the status of a virtual resource can be displayed instead of the physical CPU load or memory usage graph.

In S1909, the configuration display processing part 212 determines whether a right-click has been performed. If right-click has been performed (S1909: Yes), the configuration display processing part 212 executes S1910, and if not (S1909: No), the processing is ended.

In S1910, the configuration display processing part 212 displays the sub pull-down menu 12, and ends the processing. In the processes from S1907 to S1910, if clicks are performed for two times or more in a row, processing can be performed to execute operations such as displaying a different display, such as displaying the main pull-down menu 11, displaying only the CPU load graph, displaying only the memory usage graph, displaying only the CPU load graph and the memory usage graph, or to switch the graphs being displayed.

### <Display of Inter-Configuration-Information Search Result and Graph> FIG. 20

FIG. 20 is an image view illustrating a first display example according to inter-configuration-information search result.

The user 23 enters a search condition in the search condition entry area 119. In the example of FIG. 20, "X66_128" is entered to search for a virtual server using a x66-architecture 128-bit CPU. The configuration display processing part 212 of the cloud-configuration visualization system 20 extracts the virtual server matching the entered search condition from the configuration information 60. According to this search, three virtual servers, VSV-INS1, VSV-INS3 and VSV-INS5, that match the search condition are extracted.

Thereafter, the configuration display processing part 212 highlights the extracted virtual server icons. In the drawing, the highlights are illustrated as meshed display, but it can be any display, such as surrounding the icon with a bold frame, or having the icon flash, as long as the display indicates that the icon is different from the other icons.

The configuration display processing part 212 determines whether the extracted virtual server icon has been clicked. In FIG. 20, it is assumed that a left-click 2091 has been performed to the virtual server VSV-INS5. Therefore, the CPU load graph and the memory usage graph are displayed in the display area 2002 on the right side of the configuration diagram display area 102. The configuration display processing part 212 not only displays the CPU load graph and the memory usage graph on the display part 2106 of the client 21, but also enables the graphs to be output on paper using a printer of the output part 2105. Further, the configuration display processing part 212 can output and store the graphs as file in the storage part 2103, or output the same as file from the communication part 2107 to an external storage device.

### <Display Inter-Configuration Information Search Result and Pull-down submenu> FIG. 21

FIG. 21 is an image diagram illustrating a second display example according to the inter-configuration-information search result.

FIG. 21 highlights the virtual servers matching the search condition, similar to FIG. 20. The difference is that a right-click 2191 is performed instead of the left-click 2091 to the VSV-INS5 among the highlighted virtual servers. The configuration display processing part 212 detects this right-click 2191, and displays the sub pull-down menu 12 near the icon of the virtual server VSV-INS5. In a state where the user 23 selects a predetermined operation from the sub pull-down menu 12, the virtual server VSV-INS5 can be operated. In the present drawing, it executes power off of the virtual server VSV-INS5.

By highlighting the configuration component (resource icon) matching the search condition as described above and clicking the highlighted icon, the recognition of necessary configuration component and operation can be improved, and user-friendliness can be enhanced.

As described, according to the cloud-configuration visualization system, the information acquired from the cloud service providers can be collected to generate a visual configuration diagram. Thereby, the entire configuration of the infrastructure environment (constructed cloud environment) can be apprehended speedily and easily.

The present invention is not restricted to the above-illustrated preferred embodiments, and can include various modifications. The above-illustrated embodiments are described in detail to help understand the present invention, and the present invention is not restricted to a structure including all the components illustrated above. Further, a portion of the configuration of an embodiment can be replaced with the configuration of another embodiment, or the configuration of a certain embodiment can be added to the configuration of another embodiment. Moreover, a portion or all of the configurations of each embodiment can be added to, deleted from or replaced with other configurations. The configurations and functions described above can be realized through software by having a processor interpret and execute programs for realizing the respective functions. The respective configurations, functions and the like described above can be realized by software by the processor interpreting and executing programs for realizing the respective functions.

The information such as the programs, tables and files for realizing the respective functions can be stored in storage devices such as memories, hard disks or SSDs (Solid State Drives), or in memory media such as IC cards, SD cards or DVDs. Only the control lines and information lines considered necessary for description are illustrated in the drawings, and not necessarily all the control lines and information lines required for production are illustrated. In actual application, it can be considered that almost all the components are mutually coupled.

### [Reference Signs List]

2: Configuration viewer screen, 11: main pull-down menu, 11a: checkbox, 11b: radio button, 12: sub pull-down menu, 20: cloud-configuration visualization system, 21: client, 22: physical server, 24: cloud service (IaaS), 50: cloud connection information, 51: cloud management table, 52: cloud service management table of company A, 53: cloud service management table of company M, 60: cloud service configuration information, 100: display information selection menu, 101: selection cloud entry area, 102: configuration diagram display area, 103: user connection, 104:VPN connection, 105: VPN gateway, 106: virtual DC, 107: Internet gateway 108: load balancer, 109: network segment, 110: global IP, 111: virtual server, 112: click, 118: individual information display area, 119: search condition entry area, 211: cloud connection information reception part, 212: configuration display processing part, 221: cloud connection information registration part, 222: configuration information acquisition processing part, 223: cloud connection information DB, 241: cloud service API, 1101/1103: network icon, 1102/1104/1105/1106: link line, 1201/1202: security group information, 1404: VPN connection status icon, 1407/1408: load balancer status icon, 1410: global IP status icon, 1411/1412: virtual server status icon, 2001: highlight, 2002: graph display, 2091: left-click, 2101/3101: CPU, 2191: right-click.

## Claims

1. A cloud-configuration visualization system (20) configured to connect to one or more cloud service provision systems providing a cloud service (24), the system comprising:
a client apparatus (21) and a server apparatus (22),
the client apparatus (21) comprising
a cloud connection information reception part (211) configured to receive a cloud connection information constructing a cloud environment from a user (23), and
a configuration display processing part (212) configured to perform display control on a screen displaying a configuration of the cloud environment,
the server apparatus (22) comprising
a cloud connection information part (221) configured to store and register the cloud connection information received by the cloud connection information reception part (211) of the client apparatus (21) in a cloud connection information database, DB (223), and
a configuration information acquisition processing part (222) configured to acquire the cloud configuration information constructed in the cloud service provision system from the cloud service provision system according to a cloud configuration information acquisition request from the configuration display processing part (212) of the client apparatus (21),
wherein the configuration display processing part (212) having received a request command for displaying cloud configuration from the user (23) is configured to
extract (S701) a cloud ID for acquiring cloud configuration information from the cloud configuration display request command, and
transmit (S702) the configuration display command of the extracted cloud ID to the configuration information acquisition processing part (222),
wherein the configuration information acquisition processing part (222) is configured to
acquire (S801) a cloud connection information from the cloud connection information DB based on the cloud ID,
specify (S802-S807) a cloud service provision system acquiring the cloud configuration information based on the acquired cloud connection information, and
transmit (S809) the cloud configuration information acquired from the specified cloud service provision system to the configuration display processing part (212), and
the configuration display processing part (212) is configured to
generate a cloud configuration diagram using configuration component icons of each configuration component and connection information, based on the cloud configuration information received from the configuration information acquisition processing part, and
display (S704) the generated cloud configuration diagram on the screen.

2. The cloud-configuration visualization system (20) according to claim 1, wherein the client apparatus (21) or the server apparatus (22) comprises
a CPU configured to control an entire apparatus,
a memory configured to store information temporarily,
a storage part configured to store information permanently, and
one or more of a communication part configured to control communication with an external device, an input part configured to receive information from outside, an output part configured to output information to the external device, and a display part configured to display information.

3. The cloud-configuration visualization system (20) according to claim 2, wherein the cloud connection information includes at least a cloud ID configured to uniquely identify the cloud environment, a cloud provider ID configured to uniquely identify the cloud service provision system, a cloud name, and a network connection information to the cloud.

4. The cloud-configuration visualization system (20) according to claim 3,
wherein the cloud configuration information is composed of a cloud ID, a configuration apparatus, a configuration component, and a configuration information setting content,
the configuration apparatus at least includes a virtual data center name, a virtual network name, a virtual network equipment name, a virtual server name, and a virtual server associated information,
the configuration component corresponding to the virtual network equipment name at least includes configuration components of a load balancer, an Internet gateway, a VPN gateway, a VPN connection, and a user connection,
the configuration component corresponding to the virtual server associated information at least includes configuration components of a global IP, a security group, a machine image, a virtual CPU, a virtual memory, and a virtual storage, and
the cloud-configuration virtualization system generates an icon for each configuration apparatus or configuration component, and generates a configuration diagram.

5. The cloud-configuration visualization system (20) according to claim 4, wherein the screen at least comprises
a select menu area configured to select a display information,
a cloud entry area configured to enter a type of the cloud environment to be displayed,
a configuration diagram display area configured to display the configuration diagram,
a main menu configured to select information related to configuration component icons of the configuration diagram,
a search condition entry area configured to search a configuration component of the configuration diagram,
an individual configuration information display area configured to display a property of the configuration component of the configuration diagram, and
a submenu configured to select an operation information to be executed to the configuration component of the configuration diagram.

6. The cloud-configuration visualization system (20) according to claim 4,
wherein the main menu at least comprises items of an acquired configuration information area, a load balancer connection status, a key pair, a status, an IP address, a virtual machine image, a security group information, and a network routing information, and
the configuration display processing part (212) acquires the corresponding configuration information setting content from the cloud configuration information based on the item selected in the main menu, and displays the configuration information setting content to the configuration component icon in the configuration diagram display area on the screen.

7. The cloud-configuration visualization system (20) according to claim 4,
wherein the submenu at least comprises power on, power off, sleep, suspend, restart, discard, and add, serving as operation contents performed to the configuration component, and
the configuration display processing part (212) requests the cloud service provision system to perform the selected operation content to an operation target configuration component.

8. The cloud-configuration visualization system (20) according to claim 6, wherein if a display of network routing information is selected in the main menu,
the configuration display processing part (212) sets the selected configuration component as a link source of a network, and switches the following displays;
(1) display of a link line and a final connection IP address by connecting the link source and a next link destination of the link source via the link line,
(2) display of a link line and the final connection IP address by connecting a path between the link source and a final link destination via the link line, and
(3) display of link lines of all link destinations connected to the link source and the final IP address,
and the network routing information is displayed on the screen.

9. The cloud-configuration visualization system (20) according to claim 6,
wherein the item of the security group information of the main menu comprises a radio button for selecting an individual display for displaying only one security group information, and an integrated display of all security group information, and
the configuration display processing part (212) switches display of the security group information to the screen by selecting the radio button.

10. The cloud-configuration visualization system (20) according to claim 6,
wherein if the configuration display processing part (212) detects that a status display of the main menu has been selected,
the configuration display processing part (212) adds an operation status icon indicating an operation status of the configuration component of the configuration component icon, and displays the icon on the screen.

11. The cloud-configuration visualization system (20) according to claim 6,
wherein if the configuration display processing part (212) detects that the load balancer connection status of the main menu has been selected,
the configuration display processing part (212) specifies a virtual server icon connected to the load balancer icon based on the configuration information, and the connection status is displayed on the screen.

12. The cloud-configuration visualization system (20) according to claim 6,
wherein if the configuration display processing part (212) detects that the search condition has been entered to the search condition entry area,
the configuration display processing part (212) extracts a configuration component matching the search condition from the cloud configuration information, and highlights the configuration component icon of the extracted configuration component on the screen.

13. The cloud-configuration visualization system (20) according to claim 6,
wherein if the configuration display processing part (212) detects that the highlighted configuration component icon has been selected, the configuration display processing part (212) selects to either display an operation status of the configuration component icon on the screen, or output the information of the operation status as a file to a storage part of the client or an external storage device.

14. The cloud-configuration visualization system (20) according to claim 6,
wherein if the configuration display processing part (212) detects that the highlighted configuration component icon has been selected, the configuration display processing part (212) displays the submenu corresponding to the configuration component icon on the screen.

15. The cloud-configuration visualization system (20) according to claim 1, wherein:
the configuration information acquisition processing part (222) further comprises processing means configured to:
acquire, based on the cloud ID, the cloud connection information from a cloud connection information DB (223);
determine whether or not a cloud designated by a cloud provider ID corresponding to the specified cloud ID is provided by a first company;
send, in a case that it is determined by the first cloud determination processing part that the designated cloud is provided by the first company, an acquisition request for the configuration information to a fist cloud service, and obtain first configuration information from the first cloud service;
determine, in a case that it is determined that the designated cloud is not provided by the first company, whether or not a cloud designated by a cloud provider ID corresponding to the specified cloud ID is provided by a second company;
send, in a case that it is determined that the designated cloud is provided by the second company, an acquisition request for second configuration information to the second cloud service, and obtain the second configuration information from the second cloud service,
determine whether or not the first and second configuration information of all designated clouds has been acquired; and
transmit, in a case that all designated first and second cloud configuration information has been acquired, the acquired first and second cloud configuration information to the configuration display processing unit (212) of the client apparatus (21); and
the configuration display processing part (212) further comprises processing means configured to:
determine whether or not display of a network, NW, routing configuration is selected in a main pull-down menu of the screen;
acquire, in a case that display of the NW routing configuration is selected, a status of an NW icon included in the cloud connection information with the link destination;
determine whether or not an NW icon has been clicked;
identify, in a case that the NW icon has been clicked, an NW routing related to the clicked NW icon based on the first and second cloud configuration information;
determine whether or not to display an entire network;
display, in a case that the entire network is to be displayed, routing information (link information) for the entire network;
display, in a case that the entire network is not to be displayed, connection information between the clicked NW icon and a next link destination, and highlighting display of the NW icon;
acquire a status of the NW icon;
determine whether or not the NW icon has been clicked;
display, in a case that the NW icon has been clicked, the next link destination;
acquire a status of a link line;
determine whether or not the link line has been clicked; and
display, in a case that the link line has been clicked, through to a final link destination.

16. A cloud-configuration visualization method of a cloud-configuration visualization system (20) configured to connect to one or more cloud service provision systems providing a cloud service (24), the system comprising:
a client apparatus (21) and a server apparatus (22),
the client apparatus (21) comprising
a cloud connection information reception part (211) configured to receive a cloud connection information constructing a cloud environment from a user (23), and
a configuration display processing part (212) configured to perform display control on a screen displaying a configuration of the cloud environment,
the server apparatus (22) comprising
a cloud connection information part (221) configured to store and register the cloud connection information received by the cloud connection information reception part (211) of the client apparatus (21) in a cloud connection information database, DB (223), and
a configuration information acquisition processing part (222) configured to acquire the cloud configuration information constructed in the cloud service provision system from the cloud service provision system according to a cloud configuration information acquisition request from the configuration display processing part (212) of the client apparatus (21),
wherein the configuration display processing part (212) having received a request command for displaying cloud configuration from the user (23) executes the following steps of
extracting (S701) a cloud ID for acquiring cloud configuration information from the cloud configuration display request command, and
transmitting (S702) the configuration display command of the extracted cloud ID to the configuration information acquisition processing part (222),
wherein the configuration information acquisition processing part (222) executes the steps of
acquiring (S801) a cloud connection information from the cloud connection information DB based on the cloud ID,
specifying (S802-S807) a cloud service provision system acquiring the cloud configuration information based on the acquired cloud connection information, and
transmitting (S809) the cloud configuration information acquired from the specified cloud service provision system to the configuration display processing part, and
the configuration display processing part (212) executes the steps of
generating a cloud configuration diagram using configuration component icons of each configuration component and connection information, based on the cloud configuration information received from the configuration information acquisition processing part, and
displaying (S704) the generated cloud configuration diagram on the screen.

17. A cloud-configuration visualization program comprising instructions executable by a cloud-configuration visualization system (20) configured to connect to one or more cloud service provision systems providing a cloud service (24), the system comprising:
a client apparatus (21) and a server apparatus (22),
the client apparatus (21) comprising
a cloud connection information reception part (211) configured to receive a cloud connection information constructing a cloud environment from a user (23), and
a configuration display processing part (212) configured to perform display control on a screen displaying a configuration of the cloud environment,
the server apparatus (22) comprising
a cloud connection information part (221) configured to store and register the cloud connection information received by the cloud connection information reception part of the client apparatus (21) in a cloud connection information database, DB (223), and
a configuration information acquisition processing part (222) configured to acquire the cloud configuration information constructed in the cloud service provision system from the cloud service provision system according to a cloud configuration information acquisition request from the configuration display processing part (212) of the client apparatus (21),
wherein the configuration display processing part (212) includes instructions that, having received a request command for displaying cloud configuration from the user, cause executing the functions of
extracting a cloud ID for acquiring cloud configuration information from the cloud configuration display request command, and
transmitting the configuration display command of the extracted cloud ID to the configuration information acquisition processing part,
wherein the configuration information acquisition processing part (222) includes instructions that cause executing the functions of
acquiring a cloud connection information from the cloud connection information DB based on the cloud ID,
specifying a cloud service provision system acquiring the cloud configuration information based on the acquired cloud connection information, and
transmitting the cloud configuration information acquired from the specified cloud service provision system to the configuration display processing part, and
the configuration display processing part (212) includes instructions that cause executing the functions of
generating a cloud configuration diagram using configuration component icons of each configuration component and connection information, based on the cloud configuration information received from the configuration information acquisition processing part, and
displaying the generated cloud configuration diagram on the screen.

## Patentansprüche

1. Visualisierungssystem für eine Cloud-Konfiguration (20), das ausgelegt ist, um mit einem oder mehreren Cloud-Service-Bereitstellungssystemen, die einen Cloud-Service (24) bereitstellen, verbunden zu werden, wobei das System umfasst:
eine Client-Einrichtung (21) und eine Server-Einrichtung (22),
wobei die Client-Einrichtung (21) umfasst
einen Teil zum Empfang von Cloud-Verbindungsinformationen (211), der ausgelegt ist, um eine Cloud-Verbindungsinformation, die eine Cloud-Umgebung erstellt, von einem Benutzer (23) zu empfangen, und
einen Teil zum Verarbeiten der Konfigurationsanzeige (212), der ausgelegt ist, um eine Anzeigesteuerung auf einem Bildschirm durchzuführen, der eine Konfiguration der Cloud-Umgebung anzeigt,
wobei die Server-Einrichtung (22) umfasst
einen Teil für Cloud-Verbindungsinformationen (221), der ausgelegt ist, um die Cloud-Verbindungsinformation, die von dem Teil zum Empfang von Cloud-Verbindungsinformationen (211) der Client-Einrichtung (21) empfangen wurde, in einer Datenbank, DB, von Cloud-Verbindungsinformationen (223) zu speichern und zu registrieren, und
einen Teil zum Verarbeiten der Konfigurationsinformationserfassung (222), der ausgelegt ist, um die Cloud-Konfigurationsinformation zu erfassen, die in dem Cloud-Service-Bereitstellungssystem von dem Cloud-Service-Bereitstellungssystem gemäß einer Erfassungsanfrage einer Cloud-Konfigurationsinformation von dem Teil zum Verarbeiten der Konfigurationsanzeige (212) der Client-Einrichtung (21) erstellt wurde,
wobei der Teil zum Verarbeiten der Konfigurationsanzeige (212), der einen Anfragebefehl zum Anzeigen einer Cloud-Konfiguration von dem Benutzer (23) empfangen hat, ausgelegt ist, um
eine Cloud-ID zum Erfassen einer Cloud-Konfigurationsinformation aus dem Anfragebefehl zur Anzeige einer Cloud-Konfiguration zu extrahieren (S701) und
den Befehl zur Anzeige der Konfiguration der extrahierten Cloud-ID an den Teil zum Verarbeiten der Konfigurationsinformationserfassung (222) zu übertragen (S702),
wobei der Teil zum Verarbeiten der Konfigurationsinformationserfassung (222) ausgelegt ist, um
eine Cloud-Verbindungsinformation aus der DB von Cloud-Verbindungsinformationen basierend auf der Cloud-ID zu erfassen (S801),
ein Cloud-Service-Bereitstellungssystem, das die Cloud-Konfigurationsinformation erfasst, basierend auf der erfassten Cloud-Verbindungsinformation zu spezifizieren (S802-S807) und
die von dem spezifizierten Cloud-Service-Bereitstellungssystem erfasste Cloud-Konfigurationsinformation an den Teil zum Verarbeiten der Konfigurationsanzeige (212) zu übertragen (S809), und
wobei der Teil zum Verarbeiten der Konfigurationsanzeige (212) ausgelegt ist, um
unter Verwendung von Konfigurationskomponentensymbolen von jeder Konfigurationskomponente und Verbindungsinformationen basierend auf der von dem Teil zum Verarbeiten der Konfigurationsinformationserfassung empfangenen Cloud-Konfigurationsinformation ein Cloud-Konfigurationsdiagramm zu erzeugen, und
das erzeugte Cloud-Konfigurationsdiagramm auf dem Bildschirm anzuzeigen (S704).

2. Visualisierungssystem für eine Cloud-Konfiguration (20) nach Anspruch 1, wobei die Client-Einrichtung (21) oder die Server-Einrichtung (22) umfasst
eine CPU, die ausgelegt ist, um eine gesamte Einrichtung zu steuern,
einen Speicher, der ausgelegt ist, um Informationen vorübergehend zu speichern,
einen Speicherteil, der ausgelegt ist, um Informationen permanent zu speichern, und
eines oder mehrere von einem Kommunikationsteil, das ausgelegt ist, um die Kommunikation mit einer externen Vorrichtung zu steuern, einem Eingabeteil, der ausgelegt ist, um Informationen von außen zu empfangen, einem Ausgabeteil, der ausgelegt ist, um Informationen an die externe Vorrichtung auszugeben, und einem Anzeigeteil, der ausgelegt ist, um Informationen anzuzeigen.

3. Visualisierungssystem für eine Cloud-Konfiguration (20) nach Anspruch 2, wobei die Cloud-Verbindungsinformation mindestens eine Cloud-ID, die ausgelegt ist, um die Cloud-Umgebung eindeutig zu identifizieren, eine Cloud-Provider-ID, die ausgelegt ist, um das Cloud-Service-Bereitstellungssystem eindeutig zu identifizieren, einen Cloud-Namen und eine Netzwerksverbindungsinformation für die Cloud einschließt.

4. Visualisierungssystem für eine Cloud-Konfiguration (20) nach Anspruch 3,
wobei die Cloud-Konfigurationsinformation zusammengesetzt ist aus einer Cloud-ID, einer Konfigurationseinrichtung, einer Konfigurationskomponente und einem Inhalt zum Einrichten einer Konfigurationsinformation,
wobei die Konfigurationseinrichtung mindestens einen Namen eines virtuellen Datenzentrums, einen Namen eines virtuellen Netzwerks, einen Namen einer virtuellen Netzwerkausrüstung, einen Namen eines virtuellen Servers und eine dem virtuellen Server zugeordnete Information einschließt,
wobei die Konfigurationskomponente, die dem Namen der virtuellen Netzwerkausrüstung entspricht, mindestens Konfigurationskomponenten eines Lastausgleichers, eines Internetgateways, eines VPN-Gateways, einer VPN-Verbindung und einer Benutzerverbindung einschließt,
wobei die Konfigurationskomponente, die der dem virtuellen Server zugeordneten Information entspricht, mindestens Konfigurationskomponenten einer globalen IP, einer Sicherheitsgruppe, eines Maschinenabbilds, einer virtuellen CPU, eines virtuellen Speichers und einer virtuellen Speicherung einschließt und
wobei das Visualisierungssystem für eine Cloud-Konfiguration für jede Konfigurationseinrichtung oder Konfigurationskomponente ein Symbol erzeugt und ein Konfigurationsdiagramm erzeugt.

5. Visualisierungssystem für eine Cloud-Konfiguration (20) nach Anspruch 4, wobei der Bildschirm mindestens umfasst
einen Auswahlmenübereich, der ausgelegt ist, um eine Anzeigeinformation auszuwählen,
einen Cloud-Eingabebereich, der ausgelegt ist, um einen Typ der anzuzeigenden Cloud-Umgebung einzugeben,
einen Konfigurationsdiagrammanzeigebereich, der ausgelegt ist, um das Konfigurationsdiagramm anzuzeigen,
ein Hauptmenü, das ausgelegt ist, um Informationen in Bezug auf Konfigurationskomponentensymbole des Konfigurationsdiagramms auszuwählen,
einen Eingabebereich für Suchbedingungen, der ausgelegt ist, um eine Konfigurationskomponente des Konfigurationsdiagramms zu suchen,
einen Bereich zur Anzeige von einzelnen Konfigurationsinformationen, der ausgelegt ist, um eine Eigenschaft der Konfigurationskomponente des Konfigurationsdiagramms anzuzeigen, und
ein Untermenü, das ausgelegt ist, um eine Operationsinformation auszuwählen, die an der Konfigurationskomponente des Konfigurationsdiagramms ausgeführt werden soll.

6. Visualisierungssystem für eine Cloud-Konfiguration (20) nach Anspruch 4,
wobei das Hauptmenü mindestens Elemente eines erfassten Konfigurationsinformationsbereichs, eines Verbindungsstatus des Lastausgleichers, eines Schlüsselpaars, eines Status, einer IP-Adresse, eines virtuellen Maschinenabbilds, einer Sicherheitsgruppeinformation und einer Netzwerk-Routing-Information umfasst und
wobei der Teil zum Verarbeiten der Konfigurationsanzeige (212) den entsprechenden Inhalt zum Einrichten einer Konfigurationsinformation von der Cloud-Konfigurationsinformation basierend auf dem im Hauptmenü ausgewählten Element erfasst und den Inhalt zum Einrichten einer Konfigurationsinformation für das Konfigurationskomponentensymbol in dem Konfigurationsdiagrammanzeigebereich auf dem Bildschirm anzeigt.

7. Visualisierungssystem für eine Cloud-Konfiguration (20) nach Anspruch 4,
wobei das Untermenü mindestens Leistung an, Leistung aus, Ruhemodus, Sperren, Neustart, Verwerfen und Hinzufügen umfasst, die als Operationsinhalte dienen, die für die Konfigurationskomponente durchgeführt werden, und
wobei der Teil zum Verarbeiten der Konfigurationsanzeige (212) das Cloud-Service-Bereitstellungssystem auffordert, den ausgewählten Operationsinhalt für eine Zielkonfigurationskomponente der Operation durchzuführen.

8. Visualisierungssystem für eine Cloud-Konfiguration (20) nach Anspruch 6, wobei, wenn eine Anzeige von Netzwerk-Routing-Informationen im Hauptmenü ausgewählt ist,
der Teil zum Verarbeiten der Konfigurationsanzeige (212) die ausgewählte Konfigurationskomponente als Verknüpfungsquelle eines Netzwerks einrichtet und die nachstehenden Anzeigen umschaltet;
(1) Anzeige einer Verknüpfungsleitung und einer finalen IP-Adresse der Verbindung durch Verbinden der Verknüpfungsquelle und eines nächsten Verknüpfungsziels der Verknüpfungsquelle über die Verknüpfungsleitung,
(2) Anzeige einer Verknüpfungsleitung und der finalen IP-Adresse der Verbindung durch Verbinden eines Pfads zwischen der Verknüpfungsquelle und einem finalen Verknüpfungsziel über die Verknüpfungsleitung und
(3) Anzeige von Verknüpfungsleitungen aller mit der Verknüpfungsquelle und der finalen IP-Adresse verbundenen Verknüpfungsziele,
und die Netzwerk-Routing-Informationen auf dem Bildschirm angezeigt werden.

9. Visualisierungssystem für eine Cloud-Konfiguration (20) nach Anspruch 6,
wobei das Element der Sicherheitsgruppeninformationen des Hauptmenüs eine Optionsschaltfläche zum Auswählen einer einzelnen Anzeige, damit nur eine Sicherheitsgruppeninformation angezeigt wird, und einer integrierten Anzeige aller Sicherheitsgruppeninformationen umfasst und
wobei der Teil zum Verarbeiten der Konfigurationsanzeige (212) die Anzeige der Sicherheitsgruppeninformationen auf dem Bildschirm durch Auswählen der Optionsschaltfläche umschaltet.

10. Visualisierungssystem für eine Cloud-Konfiguration (20) nach Anspruch 6,
wobei, wenn der Teil zum Verarbeiten der Konfigurationsanzeige (212) erkennt, dass eine Statusanzeige des Hauptmenüs ausgewählt wurde,
wobei der Teil zum Verarbeiten der Konfigurationsanzeige (212) ein Operationsstatussymbol hinzufügt, das einen Operationsstatus der Konfigurationskomponente des Konfigurationskomponentensymbol angibt, und das Symbol auf dem Bildschirm anzeigt.

11. Visualisierungssystem für eine Cloud-Konfiguration (20) nach Anspruch 6,
wobei, wenn der Teil zum Verarbeiten der Konfigurationsanzeige (212) erkennt, dass der Verbindungsstatus des Lastausgleichers des Hauptmenüs ausgewählt wurde,
der Teil zum Verarbeiten der Konfigurationsanzeige (212) ein Symbol eines virtuellen Servers, das mit dem Lastausgleichersymbol verbunden ist, basierend auf den Konfigurationsinformationen spezifiziert, und der Verbindungsstatus auf dem Bildschirm angezeigt wird.

12. Visualisierungssystem für eine Cloud-Konfiguration (20) nach Anspruch 6,
wobei, wenn der Teil zum Verarbeiten der Konfigurationsanzeige (212) erkennt, dass die Suchbedingung in den Eingabebereich für Suchbedingungen eingegeben wurde,
der Teil zum Verarbeiten der Konfigurationsanzeige (212) eine Konfigurationskomponente extrahiert, die mit der Suchbedingung von der Cloud-Konfigurationsinformation übereinstimmt, und das Konfigurationskomponentensymbol der extrahierten Konfigurationskomponente auf dem Bildschirm hervorhebt.

13. Visualisierungssystem für eine Cloud-Konfiguration (20) nach Anspruch 6,
wobei, wenn der Teil zum Verarbeiten der Konfigurationsanzeige (212) erkennt, dass das hervorgehobene Konfigurationskomponentensymbol ausgewählt wurde, der Teil zum Verarbeiten der Konfigurationsanzeige (212) auswählt, entweder einen Operationsstatus des Konfigurationskomponentensymbols auf dem Bildschirm anzuzeigen oder die Informationen zum Operationsstatus als Datei an ein Speicherteil des Clients oder eine externe Speichervorrichtung auszugeben.

14. Visualisierungssystem für eine Cloud-Konfiguration (20) nach Anspruch 6,
wobei, wenn der Teil zum Verarbeiten der Konfigurationsanzeige (212) erkennt, dass das hervorgehobene Konfigurationskomponentensymbol ausgewählt wurde, der Teil zum Verarbeiten der Konfigurationsanzeige (212) das dem Konfigurationskomponentensymbol entsprechende Untermenü auf dem Bildschirm anzeigt.

15. Visualisierungssystem für eine Cloud-Konfiguration (20) nach Anspruch 1, wobei:
der Teil zum Verarbeiten der Konfigurationsinformationserfassung (222) weiter ein Verarbeitungsmittel umfasst, das ausgelegt ist, um:
basierend auf der Cloud-ID die Cloud-Verbindungsinformation von einer DB von Cloud-Verbindungsinformationen (223) zu erfassen;
zu bestimmen, ob eine durch eine Cloud-Provider-ID bezeichnete Cloud, die der spezifizierten Cloud-ID entspricht, von einem ersten Unternehmen bereitgestellt ist oder nicht;
wenn von dem ersten Teil zum Verarbeiten der Cloud-Bestimmung bestimmt ist, dass die bezeichnete Cloud von dem ersten Unternehmen bereitgestellt ist, eine Erfassungsanfrage für die Konfigurationsinformation ein einen ersten Cloud-Service zu senden und eine erste Konfigurationsinformation von dem ersten Cloud-Service zu erhalten;
wenn bestimmt ist, dass die bezeichnete Cloud nicht von dem ersten Unternehmen bereitgestellt ist, zu bestimmen, ob eine durch eine Cloud-Provider-ID bezeichnete Cloud, die der spezifizierten Cloud-ID entspricht, von einem zweiten Unternehmen bereitgestellt ist oder nicht;
wenn bestimmt ist, dass die bezeichnete Cloud nicht von dem zweiten Unternehmen bereitgestellt ist, eine Erfassungsanfrage für eine zweite Konfigurationsinformation an den zweiten Cloud-Service zu senden und die zweite Konfigurationsinformation von dem zweiten Cloud-Service zu erhalten,
zu bestimmen, ob die erste und die zweite Konfigurationsinformation von allen bezeichneten Clouds erfasst wurde oder nicht; und
wenn jede bezeichnete erste und zweite Cloud-Konfigurationsinformation erfasst wurde, die erfasste erste und zweite Cloud-Konfigurationsinformation an die Einheit zum Verarbeiten der Konfigurationsanzeige (212) der Client-Einrichtung (21) zu übertragen; und
der Teil zum Verarbeiten der Konfigurationsanzeige (212) weiter ein Verarbeitungsmittel umfasst, das ausgelegt ist, um:
zu bestimmen, ob die Anzeige einer Netzwerk-Routing-Konfiguration, NW-Routing-Konfiguration, in einem Pull-Down-Hauptmenü des Bildschirms ausgewählt ist oder nicht;
wenn die Anzeige der NW-Routing-Konfiguration ausgewählt ist, einen Status eines NW-Symbols zu erfassen, das in der Cloud-Verbindungsinformation mit dem Verknüpfungsziel enthalten ist;
zu bestimmen, ob auf ein NW-Symbol geklickt wurde oder nicht;
wenn auf das NW-Symbol geklickt wurde, ein NW-Routing in Bezug auf das Netzwerksymbol, auf das geklickt wurde, basierend auf der ersten und der zweiten Cloud-Konfigurationsinformation zu identifizieren;
zu bestimmen, ob ein gesamtes Netzwerk angezeigt werden soll oder nicht;
wenn das gesamte Netzwerk angezeigt werden soll, Routing-Informationen (Verknüpfungsinformationen) für das gesamte Netzwerk anzuzeigen;
wenn das gesamte Netzwerk nicht angezeigt werden soll, Verbindungsinformationen zwischen dem Netzwerksymbol, auf das geklickt wurde, und einem nächsten Verknüpfungsziel anzuzeigen und die Anzeige des NW-Symbols hervorzuheben;
einen Status des NW-Symbols zu erfassen;
zu bestimmen, ob auf das NW-Symbol geklickt wurde oder nicht;
wenn auf das NW-Symbol geklickt wurde, das nächste Verknüpfungsziel anzuzeigen;
einen Status einer Verknüpfungsleitung zu erfassen;
zu bestimmen, ob auf die Verknüpfungsleitung geklickt wurde oder nicht; und
wenn auf die Verknüpfungsleitung geklickt wurde, bis zu einem finalen Verknüpfungsziel anzuzeigen.

16. Visualisierungsverfahren für eine Cloud-Konfiguration eines Visualisierungssystems für eine Cloud-Konfiguration (20), das ausgelegt ist, um mit einem oder mehreren Cloud-Service-Bereitstellungssystemen, die einen Cloud-Service (24) bereitstellen, verbunden zu werden, wobei das System umfasst:
eine Client-Einrichtung (21) und eine Server-Einrichtung (22),
wobei die Client-Einrichtung (21) umfasst
einen Teil zum Empfangen von Cloud-Verbindungsinformationen (211), der ausgelegt ist, um eine Cloud-Verbindungsinformation, die eine Cloud-Umgebung erstellt, von einem Benutzer (23) zu empfangen, und
einen Teil zum Verarbeiten der Konfigurationsanzeige (212), der ausgelegt ist, um eine Anzeigesteuerung auf einem Bildschirm durchzuführen, der eine Konfiguration der Cloud-Umgebung anzeigt,
wobei die Server-Einrichtung (22) umfasst
einen Teil für Cloud-Verbindungsinformationen (221), der ausgelegt ist, um die Cloud-Verbindungsinformation, die von dem Teil zum Empfangen von Cloud-Verbindungsinformationen (211) der Client-Einrichtung (21) empfangen wurde, in einer Datenbank, DB, von Cloud-Verbindungsinformationen (223) zu speichern und zu registrieren, und
einen Teil zum Verarbeiten der Konfigurationsinformationserfassung (222), der ausgelegt ist, um die Cloud-Konfigurationsinformation zu erfassen, die in dem Cloud-Service-Bereitstellungssystem von dem Cloud-Service-Bereitstellungssystem gemäß einer Erfassungsanfrage einer Cloud-Konfigurationsinformation von dem Teil zum Verarbeiten der Konfigurationsanzeige (212) der Client-Einrichtung (21) erstellt wurde,
wobei der Teil zum Verarbeiten der Konfigurationsanzeige (212), der einen Anfragebefehl zum Anzeigen einer Cloud-Konfiguration von dem Benutzer (23) empfangen hat, folgende Schritte ausführt
Extrahieren (S701) einer Cloud-ID zum Erfassen einer Cloud-Konfigurationsinformation aus dem Anfragebefehl zur Anzeige einer Cloud-Konfiguration, und
Übertragen (S702) des Befehls zur Anzeige der Konfiguration der extrahierten Cloud-ID an den Teil zum Verarbeiten der Konfigurationsinformationserfassung (222),
wobei der Teil zum Verarbeiten der Konfigurationsinformationserfassung (222) die Schritte ausführt
Erfassen (S801) einer Cloud-Verbindungsinformation aus der DB von Cloud-Verbindungsinformationen basierend auf der Cloud-ID,
Spezifizieren (S802-S807) eines Cloud-Service-Bereitstellungssystems, das die Cloud-Konfigurationsinformation basierend auf der erfassten Cloud-Verbindungsinformation erfasst, und
Übertragen (S809) der von dem spezifizierten Cloud-Service-Bereitstellungssystem erfassten Cloud-Konfigurationsinformation an den Teil zum Verarbeiten der Konfigurationsanzeige (212), und
Wobei der Teil zum Verarbeiten der Konfigurationsanzeige (212) die Schritte ausführt
Erzeugen eines Cloud-Konfigurationsdiagramms unter Verwendung von Konfigurationskomponentensymbolen von jeder Konfigurationskomponente und Verbindungsinformationen basierend auf der von dem Teil zum Verarbeiten der Konfigurationsinformationserfassung empfangenen Cloud-Konfigurationsinformation und
Anzeigen (S704) des erzeugten Cloud-Konfigurationsdiagramms auf dem Bildschirm.

17. Visualisierungsprogramm für eine Cloud-Konfiguration, umfassend Anweisungen, die von einem Visualisierungssystem für eine Cloud-Konfiguration (20) ausführbar sind, das ausgelegt ist, um mit einem oder mehreren Cloud-Service-Bereitstellungssystemen, die einen Cloud-Service (24) bereitstellen, verbunden zu werden, wobei das System umfasst:
eine Client-Einrichtung (21) und eine Server-Einrichtung (22),
wobei die Client-Einrichtung (21) umfasst
einen Teil zum Empfangen von Cloud-Verbindungsinformationen (211), der ausgelegt ist, um eine Cloud-Verbindungsinformation, die eine Cloud-Umgebung erstellt, von einem Benutzer (23) zu empfangen, und
einen Teil zum Verarbeiten der Konfigurationsanzeige (212), der ausgelegt ist, um eine Anzeigesteuerung auf einem Bildschirm durchzuführen, der eine Konfiguration der Cloud-Umgebung anzeigt,
wobei die Server-Einrichtung (22) umfasst
einen Teil für Cloud-Verbindungsinformationen (221), der ausgelegt ist, um die Cloud-Verbindungsinformation, die von dem Teil zum Empfangen von Cloud-Verbindungsinformationen der Client-Einrichtung (21) empfangen wurde, in einer Datenbank, DB, von Cloud-Verbindungsinformationen (223) zu speichern und zu registrieren, und
einen Teil zum Verarbeiten der Konfigurationsinformationserfassung (222), der ausgelegt ist, um die Cloud-Konfigurationsinformation zu erfassen, die in dem Cloud-Service-Bereitstellungssystem von dem Cloud-Service-Bereitstellungssystem gemäß einer Erfassungsanfrage von Cloud-Konfigurationsinformationen von dem Teil zum Verarbeiten der Konfigurationsanzeige (212) der Client-Einrichtung (21) erstellt wurde,
wobei der Teil zum Verarbeiten der Konfigurationsanzeige (212) Anweisungen einschließt, die nach Empfangen eines Anfragebefehls zum Anzeigen der Cloud-Konfiguration von dem Benutzer verursachen, dass die Funktionen ausgeführt werden
Extrahieren einer Cloud-ID zum Erfassen von Cloud-Konfigurationsinformationen aus dem Anfragebefehl zur Anzeige einer Cloud-Konfiguration und
Übertragen des Befehls zur Anzeige der Konfiguration der extrahierten Cloud-ID an den Teil zum Verarbeiten der Konfigurationsinformationserfassung,
wobei der Teil zum Verarbeiten der Konfigurationsinformationserfassung (222) Anweisungen einschließt, die verursachen, dass die Funktionen ausgeführt werden
Erfassen einer Cloud-Verbindungsinformation aus der DB von Cloud-Verbindungsinformationen basierend auf der Cloud-ID,
Spezifizieren eines Cloud-Service-Bereitstellungssystems, das die Cloud-Konfigurationsinformation basierend auf der erfassten Cloud-Verbindungsinformation erfasst, und
Übertragen der von dem spezifizierten Cloud-Service-Bereitstellungssystem erfassten Cloud-Konfigurationsinformation an den Teil zum Verarbeiten der Konfigurationsanzeige, und
wobei der Teil zum Verarbeiten der Konfigurationsanzeige (212) Anweisungen einschließt, die verursachen, dass die Funktionen ausgeführt werden
Erzeugen eines Cloud-Konfigurationsdiagramms unter Verwendung von Konfigurationskomponentensymbolen von jeder Konfigurationskomponente und Verbindungsinformationen basierend auf der von dem Teil zum Verarbeiten der Konfigurationsinformationserfassung empfangenen Cloud-Konfigurationsinformation und
Anzeigen des erzeugten Cloud-Konfigurationsdiagramms auf dem Bildschirm.

## Revendications

1. Système de visualisation de configuration de nuage (20) configuré pour se connecter à un ou plusieurs systèmes de fourniture de services de nuage fournissant un service de nuage (24), le système comprenant :
un appareil client (21) et un appareil serveur (22),
l'appareil client (21) comprenant
une partie de réception d'informations de connexion de nuage (211) configurée pour recevoir des informations de connexion de nuage construisant un environnement de nuage en provenance d'un utilisateur (23), et
une partie de traitement d'affichage de configuration (212) configurée pour effectuer une commande d'affichage sur un écran affichant une configuration de l'environnement de nuage,
l'appareil serveur (22) comprenant
une partie d'informations de connexion de nuage (221) configurée pour stocker et enregistrer les informations de connexion de nuage reçues par la partie réception d'informations de connexion de nuage (211) de l'appareil client (21) dans une base de données, DB, d'informations de connexion de nuage (223), et
une partie de traitement d'acquisition d'informations de configuration (222) configurée pour acquérir les informations de configuration de nuage construites dans le système de fourniture de services de nuage en provenance du système de fourniture de services de nuage selon une demande d'acquisition d'informations de configuration de nuage en provenance de la partie de traitement d'affichage de configuration (212) de l'appareil client (21),
dans lequel la partie de traitement d'affichage de configuration (212) ayant reçu un ordre de demande pour afficher une configuration de nuage en provenance de l'utilisateur (23) est configurée pour
extraire (S701) un ID de nuage pour acquérir des informations de configuration de nuage à partir de l'ordre de demande d'affichage de configuration de nuage, et
transmettre (S702) l'ordre d'affichage de configuration de l'ID de nuage extrait à la partie de traitement d'acquisition d'informations de configuration (222),
dans lequel la partie de traitement d'acquisition d'informations de configuration (222) est configurée pour
acquérir (S801) des informations de connexion de nuage à partir de la DB d'informations de connexion de nuage sur la base de l'ID de nuage,
spécifier (S802-S807) un système de fourniture de services de nuage acquérant les informations de configuration de nuage sur la base des informations de connexion de nuage acquises, et
transmettre (S809) les informations de configuration de nuage acquises à partir du système de fourniture de services de nuage spécifié à la partie de traitement d'affichage de configuration (212), et
la partie de traitement d'affichage de configuration (212) est configurée pour
produire un schéma de configuration de nuage en utilisant des icônes de composant de configuration de chaque composant de configuration et des informations de connexion, sur la base des informations de configuration de nuage reçues à partir de la partie de traitement d'acquisition d'informations de configuration, et
afficher (S704) le schéma de configuration de nuage produit sur l'écran.

2. Système de visualisation de configuration de nuage (20) selon la revendication 1, dans lequel l'appareil client (21) ou l'appareil serveur (22) comprend
une CPU configurée pour commander un appareil entier,
une mémoire configurée pour stocker temporairement des informations,
une partie de stockage configurée pour stocker des informations de manière permanente, et
une ou plusieurs d'une partie de communication configurée pour commander les communications avec un dispositif externe, d'une partie d'entrée configurée pour recevoir des informations en provenance de l'extérieur, d'une partie de sortie configurée pour sortir des informations vers le dispositif externe, et d'une partie d'affichage configurée pour afficher des informations.

3. Système de visualisation de configuration de nuage (20) selon la revendication 2, dans lequel les informations de connexion de nuage incluent au moins un ID de nuage configuré pour identifier de manière unique l'environnement de nuage, un ID de fournisseur de nuage configuré pour identifier de manière unique le système de fourniture de services de nuage, un nom de nuage, et des informations de connexion en réseau au nuage.

4. Système de visualisation de configuration de nuage (20) selon la revendication 3,
dans lequel les informations de configuration de nuage sont composées d'un ID de nuage, d'un appareil de configuration, d'un composant de configuration et d'un contenu de paramétrage d'informations de configuration,
l'appareil de configuration inclut au moins un nom de centre de données virtuel, un nom de réseau virtuel, un nom d'équipement de réseau virtuel, un nom de serveur virtuel et des informations associées à un serveur virtuel,
le composant de configuration correspondant au nom d'équipement de réseau virtuel inclut au moins des composants de configuration d'un équilibreur de charge, d'une passerelle Internet, d'une passerelle VPN, d'une connexion VPN et d'une connexion utilisateur,
le composant de configuration correspondant aux informations associées à un serveur virtuel inclut au moins des composants de configuration d'un IP global, d'un groupe de sécurité, d'une image machine, d'une CPU virtuelle, d'une mémoire virtuelle et d'un stockage virtuel, et
le système de virtualisation de configuration de nuage produit une icône pour chaque appareil de configuration ou composant de configuration et produit un schéma de configuration.

5. Système de visualisation de configuration de nuage (20) selon la revendication 4, dans lequel l'écran comprend au moins
une zone de menu de sélection configurée pour sélectionner des informations d'affichage,
une zone d'entrée de nuage configurée pour entrer un type de l'environnement de nuage à afficher,
une zone d'affichage de schéma de configuration configurée pour afficher le schéma de configuration,
un menu principal configuré pour sélectionner des informations liées à des icônes de composant de configuration du schéma de configuration,
une zone d'entrée de condition de recherche configurée pour rechercher un composant de configuration du schéma de configuration,
une zone d'affichage d'informations de configuration individuelle configurée pour afficher une propriété du composant de configuration du schéma de configuration, et
un sous-menu configuré pour sélectionner des informations de mise en œuvre à exécuter sur le composant de configuration du schéma de configuration.

6. Système de visualisation de configuration de nuage (20) selon la revendication 4,
dans lequel le menu principal comprend au moins des éléments d'une zone d'informations de configuration acquises, d'un état de connexion d'équilibreur de charge, d'un couple de clefs, d'un état, d'une adresse IP, d'une image machine virtuelle, d'informations de groupe de sécurité et d'informations de routage de réseau, et
la partie de traitement d'affichage de configuration (212) acquiert le contenu de paramétrage d'informations de configuration correspondantes à partir des informations de configuration de nuage sur la base de l'élément sélectionné dans le menu principal, et affiche le contenu de paramétrage d'informations de configuration sur l'icône de composant de configuration dans la zone d'affichage de schéma de configuration sur l'écran.

7. Système de visualisation de configuration de nuage (20) selon la revendication 4,
dans lequel le sous-menu comprend au moins la mise en marche, l'arrêt, la mise en veille, la suspension, la reprise, le rejet et l'ajout, servant de contenus de mise en œuvre effectués sur le composant de configuration, et
la partie de traitement d'affichage de configuration (212) demande au système de fourniture de service de nuage d'effectuer le contenu de mise en œuvre sélectionné sur un composant de configuration cible de mise en œuvre.

8. Système de visualisation de configuration de nuage (20) selon la revendication 6, dans lequel si un affichage d'informations de routage de réseau est sélectionné dans le menu principal,
la partie de traitement d'affichage de configuration (212) paramètre le composant de configuration sélectionné en tant que source de liaison d'un réseau et commute les affichages suivants ;
(1) affichage d'une ligne de liaison et d'une adresse IP de connexion finale en connectant la source de liaison et une destination de liaison suivante de la source de liaison via la ligne de liaison,
(2) affichage d'une ligne de liaison et de l'adresse IP de connexion finale en connectant un chemin entre la source de liaison et une destination de liaison finale via la ligne de liaison, et
(3) affichage de lignes de liaison de toutes les destinations de liaison connectées à la source de liaison et l'adresse IP finale,
et les informations de routage de réseau sont affichées sur l'écran.

9. Système de visualisation de configuration de nuage (20) selon la revendication 6,
dans lequel l'élément des informations de groupe de sécurité du menu principal comprend un bouton radio pour sélectionner un affichage individuel pour afficher seulement une information de groupe de sécurité et un affichage intégré de toutes les informations de groupe de sécurité, et
la partie de traitement d'affichage de configuration (212) commute l'affichage des informations de groupe de sécurité sur l'écran en sélectionnant le bouton radio.

10. Système de visualisation de configuration de nuage (20) selon la revendication 6,
dans lequel si la partie de traitement d'affichage de configuration (212) détecte qu'un affichage d'état du menu principal a été sélectionné,
la partie de traitement d'affichage de configuration (212) ajoute une icône d'état de mise en œuvre indiquant un état de mise en œuvre du composant de configuration de l'icône de composant de configuration et affiche l'icône sur l'écran.

11. Système de visualisation de configuration de nuage (20) selon la revendication 6,
dans lequel si la partie traitement d'affichage de configuration (212) détecte que l'état de connexion d'équilibreur de charge du menu principal a été sélectionné,
la partie de traitement d'affichage de configuration (212) spécifie une icône de serveur virtuel connectée à l'icône d'équilibreur de charge sur la base des informations de configuration, et l'état de connexion est affiché sur l'écran.

12. Système de visualisation de configuration de nuage (20) selon la revendication 6,
dans lequel si la partie de traitement d'affichage de configuration (212) détecte que la condition de recherche a été entrée dans la zone d'entrée de condition de recherche,
la partie de traitement d'affichage de configuration (212) extrait un composant de configuration concordant avec la condition de recherche à partir des informations de configuration de nuage, et met en évidence l'icône de composant de configuration du composant de configuration extrait sur l'écran.

13. Système de visualisation de configuration de nuage (20) selon la revendication 6,
dans lequel si la partie de traitement d'affichage de configuration (212) détecte que l'icône de composant de configuration mise en évidence a été sélectionnée, la partie de traitement d'affichage de configuration (212) sélectionne soit d'afficher un état de mise en œuvre de l'icône de composant de configuration sur l'écran, soit de sortir les informations de l'état de mise en œuvre en tant que fichier vers une partie de stockage du client ou d'un dispositif de stockage externe.

14. Système de visualisation de configuration de nuage (20) selon la revendication 6,
dans lequel si la partie de traitement d'affichage de configuration (212) détecte que l'icône de composant de configuration mise en évidence a été sélectionnée, la partie de traitement d'affichage de configuration (212) affiche le sous-menu correspondant à l'icône de composant de configuration sur l'écran.

15. Système de visualisation de configuration de nuage (20) selon la revendication 1, dans lequel :
la partie de traitement d'acquisition d'informations de configuration (222) comprend en outre un moyen de traitement configuré pour :
acquérir, sur la base de l'ID de nuage, les informations de connexion de nuage à partir d'une DB d'informations de connexion de nuage (223) ;
déterminer si un nuage désigné par un ID de fournisseur de nuage correspondant à l'ID de nuage spécifié est fourni ou non par une première société ;
envoyer, dans un cas où il est déterminé par la première partie de traitement de détermination de nuage que le nuage désigné est fourni par la première société, une demande d'acquisition des informations de configuration à un premier service de nuage, et obtenir des premières informations de configuration du premier service de nuage ;
déterminer, dans un cas où il est déterminé que le nuage désigné n'est pas fourni par la première société, si un nuage désigné par un ID de fournisseur de nuage correspondant à l'ID de nuage spécifié est fourni ou non par une seconde société ;
envoyer, dans un cas où il est déterminé que le nuage désigné est fourni par la seconde société, une demande d'acquisition de secondes informations de configuration au second service de nuage, et obtenir les secondes informations de configuration en provenance du second service de nuage,
déterminer si les premières et secondes informations de configuration de tous les nuages désignés ont été acquises ou non ; et
transmettre, dans un cas où toutes les premières et secondes informations de configuration de nuage désigné ont été acquises, les premières et secondes informations de configuration de nuage acquises à l'unité de traitement d'affichage de configuration (212) de l'appareil client (21) ; et
la partie de traitement d'affichage de configuration (212) comprend en outre un moyen de traitement configuré pour :
déterminer si l'affichage d'une configuration de routage de réseau, NW, est sélectionné ou non dans un menu déroulant principal de l'écran ;
acquérir, dans un cas où l'affichage de la configuration de routage NW est sélectionné, un état d'une icône NW incluse dans les informations de connexion de nuage avec la destination de liaison ;
déterminer si on a cliqué ou non sur une icône NW ;
identifier, dans un cas où on a cliqué sur l'icône NW, un routage NW lié à l'icône NW sur laquelle on a cliqué sur la base des premières et secondes informations de configuration de nuage ;
déterminer s'il faut ou non afficher un réseau entier ;
afficher, dans un cas où le réseau entier doit être affiché, des informations de routage (informations de liaison) pour le réseau entier ;
afficher, dans un cas où le réseau entier ne doit pas être affiché, des informations de connexion entre l'icône NW sur laquelle on a cliqué et une destination de liaison suivante, et afficher une mise en évidence de l'icône NW ;
acquérir un état de l'icône NW ;
déterminer si on a cliqué ou non sur l'icône NW ;
afficher, dans un cas où on a cliqué sur l'icône NW, la destination de liaison suivante ;
acquérir un état d'une ligne de liaison ;
déterminer si on a cliqué ou non sur la ligne de liaison ; et
afficher, dans un cas où on a cliqué sur la ligne de liaison, jusqu'à une destination de liaison finale.

16. Procédé de visualisation de configuration de nuage d'un système de visualisation de configuration de nuage (20) configuré pour se connecter à un ou plusieurs systèmes de fourniture de services de nuage fournissant un service de nuage (24), le système comprenant :
un appareil client (21) et un appareil serveur (22),
l'appareil client (21) comprenant
une partie de réception d'informations de connexion de nuage (211) configurée pour recevoir des informations de connexion de nuage construisant un environnement de nuage en provenance d'un utilisateur (23), et
une partie de traitement d'affichage de configuration (212) configurée pour effectuer une commande d'affichage sur un écran affichant une configuration de l'environnement de nuage,
l'appareil serveur (22) comprenant
une partie d'informations de connexion de nuage (221) configurée pour stocker et enregistrer des informations de connexion de nuage reçues par la partie de réception d'informations de connexion de nuage (211) de l'appareil client (21) dans une base de données, DB, d'informations de connexion de nuage (223), et
une partie de traitement d'acquisition d'informations de configuration (222) configurée pour acquérir les informations de configuration de nuage construites dans le système de fourniture de service de nuage en provenance du système de fourniture de service de nuage selon une demande d'acquisition d'informations de configuration de nuage en provenance de la partie traitement d'affichage de configuration (212) de l'appareil client (21),
dans lequel la partie de traitement d'affichage de configuration (212) ayant reçu un ordre de demande pour afficher une configuration de nuage en provenance de l'utilisateur (23) exécute les étapes suivantes consistant à
extraire (S701) un ID de nuage pour acquérir des informations de configuration de nuage à partir de l'ordre de demande d'affichage de configuration de nuage, et
transmettre (S702) l'ordre d'affichage de configuration de l'ID de nuage extrait à la partie de traitement d'acquisition d'informations de configuration (222),
dans lequel la partie de traitement d'acquisition d'informations de configuration (222) exécute les étapes consistant à
acquérir (S801) des informations de connexion de nuage à partir de la DB d'informations de connexion de nuage sur la base de l'ID de nuage,
spécifier (S802-S807) un système de fourniture de service de nuage acquérant les informations de configuration de nuage sur la base des informations de connexion de nuage acquises, et
transmettre (S809) les informations de configuration de nuage acquises en provenance du système de fourniture de service de nuage spécifié à la partie de traitement d'affichage de configuration, et
la partie de traitement d'affichage de configuration (212) exécute les étapes consistant à
produire un schéma de configuration de nuage en utilisant des icônes de composant de configuration de chaque composant de configuration et des informations de connexion, sur la base des informations de configuration de nuage reçues en provenance de la partie de traitement d'acquisition d'informations de configuration, et
afficher (S704) le schéma de configuration de nuage produit sur l'écran.

17. Programme de visualisation de configuration de nuage comprenant des instructions exécutables par un système de visualisation de configuration de nuage (20) configuré pour se connecter à un ou plusieurs systèmes de fourniture de services de nuage fournissant un service de nuage (24), le système comprenant :
un appareil client (21) et un appareil serveur (22),
l'appareil client (21) comprenant
une partie de réception d'informations de connexion de nuage (211) configurée pour recevoir des informations de connexion de nuage construisant un environnement de nuage en provenance d'un utilisateur (23), et
une partie de traitement d'affichage de configuration (212) configurée pour effectuer une commande d'affichage sur un écran affichant une configuration de l'environnement de nuage,
l'appareil serveur (22) comprenant
une partie d'informations de connexion de nuage (221) configurée pour stocker et enregistrer les informations de connexion de nuage reçues par la partie de réception d'informations de connexion de nuage de l'appareil client (21) dans une base de données, DB, d'informations de connexion de nuage (223), et
une partie de traitement d'acquisition d'informations de configuration (222) configurée pour acquérir les informations de configuration de nuage construites dans le système de fourniture de service de nuage en provenance du système de fourniture de service de nuage selon une demande d'acquisition d'informations de configuration de nuage en provenance de la partie de traitement d'affichage de configuration (212) de l'appareil client (21),
dans lequel la partie de traitement d'affichage de configuration (212) inclut des instructions qui, ayant reçu un ordre de demande pour afficher une configuration de nuage en provenance de l'utilisateur, amènent l'exécution des fonctions consistant à
extraire un ID de nuage pour acquérir des informations de configuration de nuage à partir de l'ordre de demande d'affichage de configuration de nuage, et
transmettre l'ordre d'affichage de configuration de l'ID de nuage extrait à la partie de traitement d'acquisition d'informations de configuration,
dans lequel la partie de traitement d'acquisition d'informations de configuration (222) inclut des instructions qui amènent l'exécution des fonctions consistant à
acquérir des informations de connexion de nuage à partir de la DB d'informations de connexion de nuage sur la base de l'ID de nuage,
spécifier un système de fourniture de service de nuage acquérant les informations de configuration de nuage sur la base des informations de connexion de nuage acquises, et
transmettre les informations de configuration de nuage acquises en provenance du système de fourniture de service de nuage spécifié à la partie de traitement d'affichage de configuration, et
la partie de traitement d'affichage de configuration (212) inclut des instructions qui amènent l'exécution des fonctions consistant à
produire un schéma de configuration de nuage en utilisant des icônes de composant de configuration de chaque composant de configuration et des informations de connexion, sur la base des informations de configuration de nuage reçues en provenance de la partie de traitement d'acquisition d'informations de configuration, et
afficher le schéma de configuration de nuage produit sur l'écran.
